# EUROPÄISCHE PATENTSCHRIFT

(11) **EP 1 097 338 B1**
(45) Veröffentlichungstag und Bekanntmachung des Hinweises auf die Patenterteilung: **02.05.2002**
(21) Anmeldenummer: 99930973.5
(22) Anmeldetag: 14.07.1999
(51) Int. Cl.: F16L 59/10, F16L 59/02

(54) **ISOLIERUNG, VERFAHREN ZUM ISOLIEREN UND ABGASLEITUNGSSYSTEM**
INSULATION, INSULATION METHOD AND EXHAUST GAS PIPING SYSTEM
ISOLATION, PROCEDE D'ISOLATION ET SYSTEME DE TUYAU DE GAZ D'ECHAPPEMENT

(30) Priorität: 20.07.1998 EP 98113497; 17.12.1998 EP 98123954
(43) Veröffentlichungstag der Anmeldung: 09.05.2001
(73) Patentinhaber: ETIS AG, 9053 Teufen (CH)
(72) Erfinder: WIRTH, Anton, CH-9056 Gais (CH)
(74) Vertreter: Stocker, Kurt
(86) Internationale Anmeldenummer: CH9900323
(87) Internationale Veröffentlichungsnummer: WO0005532

(56) Entgegenhaltungen:
- EP-A- 0 016 328
- CH-A- 151 014
- DE-A- 19 730 153
- US-A- 5 134 846
- US-A- 5 617 900

## Beschreibung

Die Erfindung bezieht sich auf Isolierungen nach dem Oberbegriff des Anspruches 1, auf Verfahren zum Isolieren nach dem Oberbegriff des Anspruches 9 und auch auf Abgasleitungssysteme. Solche Isolierungen und Verfahren zum Isolieren werden zum thermischen und akustischen Isolieren von Verbrennungsmotoren, insbesondere deren Auspuffleitungen, Turboladern, Katalysatoren und Schalldämpfern eingesetzt. Sie können aber allgemein bei Rohren, Rohrkrümmern, Leitungskompensatoren oder Behältern, und dgl. an deren Oberfläche erhöhte Temperaturen und insbesondere mechanischen Schwingungen auftreten und/oder von denen Geräusche ausgehen, vorteilhaft angebracht werden. Insbesondere soll die Isolierung auch zum Isolieren von flexiblen Leitungen, wie flexiblen Metallschläuchen eingesetzt werden können.

Die Erfindung betrifft insbesondere thermische und akustische Isolierungen für Auspuffleitungen, Kollektoren, Schalldämpfer und Katalysatoren von Motorfahrzeugen, sowie die für solche Massenprodukte benötigten einfachen und kostengünstigen Herstellungsverfahren.

Die Isolierung von Auspuffrohren bzw. Abgasleitungen hat die Aufgabe, den Wärmeabgabe durch Abstrahlung und Konvektion von den heissen Teilen sowie die Schallübertragung zu reduzieren und gegebenenfalls einen Berührungsschutz zu gewährleisten. Wenn aufgrund der Isolierung eine gleichmässige Temperaturverteilung auf dem Auspuff, dem Katalysator oder dem Turbolader erzielt wird, so können Wärmespannungen, bzw. Spannungsrisse in den Gusskörpem, verhindert werden. Kleinere Wärmeverluste würden die Wirksamkeit der Katalysatoren erhöhen und die Erwärmung in der Umgebung der isolierten Teile reduzieren.

Die bekannten Isoliersysteme sind an die jeweilige Anwendung angepasst. So sind aus dem Motorfahrzeug- und insbesondere dem Flugzeugbau vorwiegend trennende, sich insbesondere entlang ebener Flächen erstreckende, Isolierungen bekannt, die zwischen dem Motor bzw. den Abgasleitungen und dem Kabinenbereich eingesetzt sind. Beispiele dazu sind aus der EP 061 656 A2 und der DE 34 11 924 A1 bekannt. Mit diesen im wesentlichen ebenen Isolierflächen wird nur eine Isolierung in einer Richtung erzielt. Die Wärme- und Schallabgabe an die Umgebung des Motors und der Abgasleitungen wird nicht eingeschränkt und erfolgt meist entlang des gesamten Abgasleitungssystems.

Zur Isolierung von flexiblen Metallschläuchen und Auspuffkrummern wird auch die sogenannte umwickelte Isolierung eingesetzt. Eine umwickelte Isolierung besteht entweder aus einer sogenannten Glasfaserschnur oder aus einer rechteckigen Glasfaserpackung, die einfach um das zu isolierende Objekt gewickelt wird, wobei die einzelnen Windungen mittels rostfreiem Draht zusammengenäht werden. Um die gewünschten Bewegungen der flexiblen Metallschläuche und die wärmedehnungsbedingten Bewegungen der umwickelten Leitungen nicht zu behindern, muss sichergestellt werden, dass sich die Leitung unter der Isolierung möglichst frei bewegen kann. Dies ist teilweise kaum zu erreichen, da zwischen der Umwicklung und der Leitung aufgrund der Oberflächen-Strukturen und -Formen grosse Reibungskräfte auftreten, was unweigerlich eine Zerstörung der Isolierung zur Folge hat.

Bei grossen Schiffsmotoren oder bei stationären Motoren werden zur Auspuff- und Turboladerisolierung sogenannte Kassettenisolierung eingesetzt, die Isolierkissen umfassen, deren Hüllen aus Glasfaserstoff bestehen und die mit Isoliermatten gefüllt sind. In der WO 97/48943 wird eine verbesserte thermische und akustische Isolierung für Maschinenkomponenten mit starken mechanischen Schwingungen beschrieben. Sie besteht aus halbschalenförmigen Isolierelementen, die räumlich so ausgebildet sind, dass sie exakt den Konturen des zu isolierenden Körpers folgen. Die Isolierelemente umfassen Hüllen und darin aufgenommenes Isoliermaterial. Die Aussenhaut bzw. der nach aussen gerichteten Hüllenbereich der Isolierelemente ist aus einem mit Silikon beschichteten Glasfaserstoff gefertigt, um die Isolierung gegen Öl- und Wasser zu schützen. Die Innenhaut, bzw. der gegen den zu isolierenden Körper gerichtete Hüllenbereich, besteht aus einem Glasfasergewebe, das mit V4A-Draht durchwoben ist, so dass der Stoff bessere mechanische Eigenschaften bei hohen Temperaturen hat. Die stirnseitigen Enden werden durch Silikatfaserplatten verstärkt. um der Isolierung die notwendige Steifigkeit zu verleihen, um eine leichte Montage zu ermöglichen und um Axialkräfte aufnehmen zu können. Die Isolierelemente umfassen zwischen der Hülle und dem zu isolierenden Körper ein Chromstahlblech oder ein Chromstahlnetz als Reibungsschicht, welche die Reibung zwischen der Isolierung und dem Bauteil zu einem grossen Anteil aufnimmt. Als Isoliermaterial wird langfaserige Silikatfaserwolle verwendet. Die Isolierelemente werden bei den Trennfugen durch Lappen, die mit einem Metallklettenverschluss versehen sind, zusammengehalten.

Um die Hüllenschichten und die Reibungsschicht in konstantem bzw. verschwindendem Abstand zur jeweiligen Aussenkontur der Bauteile verlaufend auszubilden, werden diese aus Zuschnitteilen von flächigen Materialbahnen hergestellt. Es handelt sich also grundsätzlich um zweidimensionale Teile, die erst durch das Zusammennähen im Falle des Drahtgitters durch Rollenschweissen, oder im Falle des Isoliermateriales durch das gestossene Einfüllen in die Hülle, zu einer Schicht mit dreidimensionaler bzw. gekrümmter Form führen. Die flächigen Teile müssen als Zuschnitte so gewählt werden, dass die daraus zusammengestellten Schichten eine im wesentlichen exakt an das Bauteil angepasste Form erhalten. Das Zuschneiden und das anschliessende Vernähen der Zuschnitte bzw. Abwicklungen ist aufwendig und insbesondere nicht geeignet zur Herstellung eines kostengünstigen Massenproduktes. Ein wesentlicher Nachteil der Hüllen aus Glasfaserstoff besteht darin, dass sich insbesondere in feuchter Umgebung zumindest an der Innenhaut Kondenswasser sammeln kann, das beim Heisswerden des Bauteils überhitzt und plötzlich verdampft wird. Dabei werden die aus Fasern gebildeten Fäden beschädigt und mit der Zeit wird das Gewebe spröde.

Aus der US 4 442 585 ist eine Isolierung bekannt, deren Isolierelemente Isoliermaterial aus Keramikfasern in einer Hülle aus mit Silikon beschichtetem Fiberglasgewebe umfassen. Um die Isolierung zusammenzuhalten, wird ein flexibel bzw. grossmaschig gestrickter Strumpf aus Draht darüber gezogen. Weil die Silikonbeschichtung nur bis zu Temperaturen von 180-200°C beständig ist, kann eine Isolierung gemäss der US 4 442 585 lediglich für Bauteile eingesetzt werden, deren Temperatur auch im isolierten Zustand unterhalb von 200°C liegt. Dies schränkt die Einsatzmöglichkeit der Isolierung unerwünscht stark ein. Zudem wird das Fiberglasgewebe beim Isolieren von Komponenten mit hohen Temperaturen aufgrund der möglichen schnellen Verdampfung von Kondenswasser spröde.

In der US 5 617 900 ist eine Isolierung beschrieben, die zwischen einem inneren und einem äusseren aus Metalldraht gestrickten Strumpf eine zylindrisch geschlossen angeordnete Metallfolie umfasst. Diese Isolierung soll um Leitungen angeordnet werden, die durch Raumbereiche mit erhöhter Temperatur führen. Die Warmeschutzwirkung soll durch die reflektierende Metallfolie erzielt werden. Der äussere Metalldraht-Strumpf hält die Folie an der Leitung und ist grossmaschig ausgebildet, so dass die Reflektionswirkung der Folie möglichst unbeeinträchtigt zur Geltung kommt. Diese Isolierung ist nicht geeignet, um Leitungen mit sehr hohen Innentemperaturen genügend gut nach aussen zu isolieren, bzw. um grosse Temperaturgradienten zu gewährleisten. Die Wärmeleitungsfähigkeit senkrecht durch die Isolierung ist viel zu hoch. Zudem kann sich zwischen der Leitung und der Metallfolie Kondenswasser bilden, das beim Verdampfen zu Problemen führt.

Die US 5 816 043 beschreibt eine Isolierung eines Kollektor-Rohrteils für Motoren die auf sehr hohen Temperaturen betrieben werden. Die Isolierung soll einen Hitzeschild oder eine Wärmebarriere zwischen dem heissen Rohrteil und einem Hitze empfindlichen Betriebsteil bilden. Die Isolierung besteht aus halbschalenförmigen Isolierelementen, die das Rohrteil umschliessen und mittels Spangen daran festgesetzt sind. Die Isolierelemente bestehen aus einer Hülle aus Metallfolie und darin angeordnetem Fasermatten-lsoliermaterial. Weil die Temperatur des isolierten Rohrteils zwischen der Umgebungstemperatur und sehr hohen Temperaturen schwankt, kann sich zwischen dem Rohrteil und der Metallfolie Kondenswasser bilden, das beim Verdampfen zu Problemen führt.

Es zeigt sich nun, dass keine Isolierung bekannt ist, die eine genügende Wärmedämmung insbesondere bei hohen Temperaturen gewährleistet und bei der Bildung von Kondenswasser ein plötzliches Verdampfen und die damit verbundenen Schäden vermeidet. Zudem ist die Schallabsorption der meisten vorgängig beschriebenen Lösungen nur ungenügend.

Der vorliegenden Erfindung liegt daher die Aufgabe zugrunde, eine Isolierung zu schaffen, die gute thermische und insbesondere gute akustische Isolationseigenschaften hat und auch in feuchter Umgebung betriebssicher bzw. im wesentlichen wartungsfrei ist. Die Isolierung soll an verschiedenartig geformten Bauteilen mit kleinem Aufwand montierbar sein.

Diese Aufgabe wird durch die Merkmale des Anspruches 1 und durch die Merkmale des Anspruches 9 gelöst. Die abhängigen Ansprüche beschreiben bevorzugte bzw. alternative Ausführungsformen.

Die erfinderische Lösung dieser Aufgabe ermöglicht im Bereich der Verbrennungsmotoren die Lösung einer neuen allgemeineren Aufgabe. Diese allgemeinere Aufgabe wurde bis anhin nicht erkannt, weil man im Fahrzeugbereich die hohe Temperatur der Heissgase lediglich als Gefahr fur an die Abgasleitungen angrenzende Tieftemperaturbereiche, wie der Fahrzeuginnenraum oder der Tank, und für Komponenten mit Kunststoff- oder Gummiteilen wie beispielsweise die Lamda-Sonde, betrachtet hat. Die Aufgabe, der für den Fahrzeugbau entwickelten Isolierungen, bestand darin, die Tieftemperatur-Teilräume wärmemässig so gut wie möglich von den Abgasleitungen abzutrennen und die Abgasleitungen so gut, wie möglich zu kühlen. Daher wurden vorzugsweise flächige Wärmeschilder im Bereich der Abgasleitungen entlang der Fahrraumberandung angeordnet und die Abgasleitungen offen im vom Fahrtwind gekühlten Bodenbereich des Fahrzeuges angeordnet.

Auch die US 5 816 043 geht von der Aufgabe aus, die Isolierung solle einen Hitzeschild oder eine Wärmebarriere zwischen dem heissen Rohrteil und einem Hitze empfindlichen Betriebsteil bilden. Die Isolierung besteht aus halbschalenförmigen Isolierelementen, die das Rohrteil im Nahbereich eines empfindlichen Betriebsteils umschliessen. Gemäss dem Stande der Technik muss also für jeden Bereich und jedes Teil, das nicht über eine bestimmte Temperatur erhitzt werden darf, eine separate Isolierung eingesetzt werden.

Im Bereich der Verbrennungsmotoren ergibt sich also die allgemeinere Aufgabe, eine einheitliche Lösung für die Verteilung der Wärme der Heissgase zu finden. Diese Aufgabe wird durch die Merkmale des Anspruches 10 gelöst.

Beim Lösen dieser Aufgabe wurde erkannt, dass die Abgasleitungen im wesentlichen direkt von deren Anschlussbereich am Motor mit einer die Leitungen vollständig umschliessenden Isolierung isoliert werden sollen, um die Wärmeenergie der Heissgase möglichst verlustfrei durch den überwiegenden Teil des Abgasleitungssystems zu führen. Dadurch wird mit einer einheitlichen Isolierung gewährleistet, dass die Tieftemperatur-Teilräume und die Betriebsteile nicht unnötig erhitzt werden. Durch die gezielte Führung der Heissgaswärme, kann gewährleistet werden, dass ein gegebenenfalls im Abgasleitungssystem eingesetzter Katalysator schnell auf die benötigte Betriebstemperatur gelangt und auch bei Unterbrüchen des Motorenbetriebs die Betriebstemperatur im wesentlichen über lange Zeit beibehält. Die Isolierung des Abgasleitungssystems gewährleistet auch eine bessere Schalldämpfung.

Ein weiterer Vorteil der gezielten Führung der Heissgas-Warmeenergie, besteht in der Möglichkeit diese Energie vor dem Austritt der Heissgase aus dem Abgasleitungssytem zu nutzen. Durch die Isolierung ist gewährleitet, dass auch vom Austritt aus dem Motor entfernt eine hohe Abgastemperatur vorliegt. Die hohe Temperatur ermöglicht das Durchführen eines Energieumwandlungsprozesses, insbesondere eines Kreisprozesses, mit hohem Wirkungsgrad. Die Nutzung der Abgaswärme muss, wenn ein Katalysator eingesetzt ist, nach diesem erfolgen. Selbst wenn keine Energienutzung vorgesehen ist, ist es zweckmässig die Isolierung im wesentlichen bis zur Abgasaustrittsöffnung anzuordnen. Um dort eine von den heissen Abgasen ausgehende Verbrennungsgefahr zu verhindern, wird vorzugsweise eine Verdünnungs- bzw. Düsenvorrichtung angeordnet, die den Abgasen einen genügend grossen Anteil Umgebungsluft beimischt. Dadurch kann gewährleistet werden dass das austretende Gas-Luftgemisch eine Temperatur unterhalb einer vorgegebenen Maximaltemperatur hat.

Mit Isoliermaterial gefüllte Hüllen aus mit Draht hergestelltem Flachmaterial, bzw. textilem Material aus Draht, die an die jeweilige Form der Aussenfläche des Bauteils angepasst sind, bzw. mit einer Kontaktfläche im wesentlichen dicht an der Aussenfläche des Bauteiles anliegen, haben sehr gute Isolationseigenschaften. Unter textilem Material aus Draht, bzw. mit Draht hergestelltem Flachmaterial, sollen Gewebe, Maschenware und auch Flechtware aus Draht verstanden werden. Zur Herstellung der textilen Hüllen werden widerstandsfähige Drähte, insbesondere Edelstahldrähte, bzw. Drähte aus rostfreiem Stahl, verwendet. Die Wahl eines Drahtes hängt dabei sowohl von der zu erwartenden Temperatur- und Reibungs-, Feuchtigkeits- und gegebenenfalls Säurebelastung als auch von der Art der Verarbeitung zum textilen Material ab.

Durch die Hülle aus mit Draht hergestelltem Flachmaterial ist ein Feuchtigkeitsaustausch gewährleistet, der verhindert, dass sich Kondenswasser zwischen dem Bauteil und der Innenhaut der Hülle überhitzen und plötzlich verdampfen kann. Obwohl das Drahtgewebe luftdurchlässig ist, kann diese Durchlässigkeit durch die Wahl der Maschenzahl pro Fläche und die Wahl des Drahtquerschnittes so klein gewählt werden, dass die Konvektionsströmung durch die Isolierung genügend klein ist. Indem das Fasermaterial direkt an das aus Draht hergestellte Flachmaterial angrenzt, kann verhindert werden, dass weitere Schichtgrenzen, die beispielsweise dampfundurchlässig, nicht temperaturbeständig oder beschädigungsanfällig sind, ausgebildet werden. Die Innenhaut und/oder die Aussenhaut ist bzw. sind vorzugsweise als Mikrofilter-Metallgewebe ausgebildet. Mikrofilter-Metallgewebe haben sehr hohe Maschenzahlen und werden aus Drähten mit kleinem Querschnitt gebildet. Solche Filter-Drahtgewebe können Filterfeinheiten von wenigen Mikrons - beispielsweise von 20µ - aufweisen, und haben entsprechend kleine Luftdurchtrittsquerschnitte, was gewährleistet, dass sich keine oder nur minimale Konvektionsströmungen durch die Hülle, insbesondere durch die Aussenhaut ausbilden können. Zudem kann mit der Filterfeinheit auch gewährleistet werden, dass im wesentlichen keine Fasern des Isoliermaterials aus der Hülle austreten können.

Ein bevorzugtes Mikrofilter-Metallgewebe mit der Filterfeinheit von 20µ hat einen Kettdraht-Durchmesser von 0.042mm, einen Schussdraht-Durchmesser von 0.125mm und eine Maschenzahl von 600x125 pro cm². Die Drähte des besonders geeigneten Mikrofilter-Flachmaterials haben Durchmesser im Bereich von 0.02mm bis 0.4, insbesondere von 0.04mm bis 0.13mm und die Maschenzahl in einer Richtung liegt im Bereich von 80 bis 1000 1/cm. Der Werkstoff der Drahte wird mit WN1.4539 bezeichnet und ist ein hochsäurebeständiger Sonder-Stahl mit besonders guter Beständigkeit gegen Schwefel- und Phosphorsäure. Im weiteren hat der Werkstoff eine gute Beständigkeit gegen konzentrierte organische Säuren, auch bei höheren Temperaturen, sowie gegen Salzund Sodalösungen. Der Stahl ist besonders unempfindlich gegen Lochfrass und Spannungskorrosion. Zufolge seines auf maximal 3% abgesenkten Kohlenstoffgehaltes ist er vollkommen kornzerfallbeständig und ohne thermische Nachbehandlung schweissbar. Der Werkstoff kann bis zu Temperaturen von 1000°C, bzw. im Dauerbetrieb über 450-800°C, eingesetzt werden.

Nebst der Konvektion durch die Aussenhaut trägt auch die Wärmeleitung der Hülle, insbesondere der Innenhaut, zum Wärmefluss durch die Isolierung bei. Bei einer Hülle bzw, einer Innenhaut aus textilem Drahtmaterial liegt nur ein minimaler Anteil der Gesamtfläche am heissen Bauteil an, weil ja die Oberflächenstruktur einer textilen Fäche nicht eben ist. Bereits ein gerader Draht kann nur linienförmig an einer glatten Oberfläche anliegen. Bei einer textilen Fläche aus Draht werden die vorstehenden Kontaktstellen von gerümmten Drahtbereichen gebildet und sind somit im wesentlichen lediglich punktförmig. Daher strömt nur ein minimaler Anteil der Wärme aufgrund der Wärmeleitung der Innenhaut vom Bauteil weg. Weil die Wärmeleitzahl der Metalldrähte ca. 1000 mal grösser ist als jene von Luft und ca. 500 mal grösser als jene von Glaswolle, ist es wichtig, dass die Wärmeleitung durch die Hülle aufgrund des minimalen Kontaktes klein bleibt. Bei einer Metallfolie sind hingegen ganze Bereiche der Oberfläche in Wärmeleitungskontakt mit dem Bauteil, was zu einer unerwünscht starken Wärmeleitung führt.

Weil ein grosser Anteil der austretenden Wärmeenergie als Strahlungswärme abgestrahlt wird. ist die Wirkung der Innen- und der Aussenhaut auf das Wärmestrahlungsfeld um das isolierte Bauteil sehr wichtig. Die gemäss dem Stande der Technik häufig eingesetzten Metallfolien sollen als Reflektionsflächen die Wärmeabstrahlung vermindern. Weil aber die Innenhaut bereits aufgrund des Wärmeleitungskontaktes zum Bauteil und aufgrund ihrer grossen Wärmeleitfähigkeit im wesentlichen auf die Temperatur der Bauteiloberfläche erhitzt wird, wirkt die Metallfolie im wesentlichen als, mit der Bauteiloberfläche ohne Folie vergleichbare Wärmestrahlungsfläche. Ihre Reflexionsfähigkeit kommt im dünnen bis verschwindenden Spaltbereich zwischen der Bauteiloberfläche und der Innenseite der Innenhaut nicht zum Tragen. Eine Innenhaut, die als textile Schicht aus Draht gebildet ist, hat - wie oben erwähnt - einen schlechteren Wärmeleitungskontakt zur Bauteiloberfläche und gelangt auf eine Temperatur, die tiefer liegt als die Temperatur der Bauteiloberfläche.

Eine Innenhaut aus Draht erzeugt im Vergleich zu einer Metallfolien-Innenhaut nicht nur ein Strahlungsfeld auf einer tieferen Temperatur, sondern hat aufgrund der stark strukturieren Oberfläche ein ganz anderes Abstrahlverhalten als eine ebene Metallfolie und ist zudem teildurchlässig für Wärmestrahlung. Dabei ist zu beachten, dass das spektrale Emissionsvermögen für Wärmestrahlung in einem von der Temperatur des Strahlers abhängigen Wellenlängenbereich maximal ist. Für schwarze Strahler liegt gemäss dem Wienschen Verschiebungsgesetz die Wellenlänge mit der maximalen Wärmeabstrahlung bei 2.9/T mm°K, wobei die Temperatur in °Kelvin einzusetzten ist. Bei isolierten Abgasleitungen von Autos liegen die Temperaturen im Bereich von ca. 300 - 700°C (573 - 973°K) und entsprechend ist die Abstrahlung maximal für Wellenlängen von 5µm bzw. 3µm. Wenn nun Mikrofilter-Metallgewebe mit Drahtdurchmessern von 30 - 300µm ausgegangen wird, so ist die Wellenlänge klein im Vergleich zum Drahtdurchmesser. Wenn die Wellenlänge kleiner als die Öbjektausdehnung ist, wird die Wirkung des Objektes auf die Ausbreitung des Wellenfeldes als Diffraktion beschrieben. Die bekannten Diffraktions-Approximations-Ansätze stammen von Huygens, Young. Fresnel, Kirchhoff, Rayleigh und Sommerfeld. Grundsätzlich kann davon ausgegangen werden, dass bei der Diffraktion die Energie einer ebenen Welle hinter dem diffraktiven Objekt aufgeteilt ist auf die Ausbreitungsrichtung der ebenen Welle und auf davon abweichende Richtungen. In bestimmten Richtungen treten Zwischenmaxima auf, welche beispielsweise bei sichtbarem Licht als Diffraktionsmuster erkennbar sind. Wenn die Wellenlänge gleich gross ist, wie die relevante Objektausdehnung, so versagen die bekannten Approximationsansätze.

Um die Wirkung eines Mikrofilter-Metallgewebes in einem Wärmestrahlungsfeld zu veranschaulichen, kann vom sichtbaren Licht mit Wellenlängen im Bereich von 0.4 - 0.8µm was auch klein ist im Vergleich zum Drahtdurchmesser, ausgegangen werden. Eine lichtstarke Umgebung kann durch ein Mikrofilter-Metallgewebe betrachtet werden, wobei aber die Lichtstärke stark reduziert ist und Diffraktionsmuster auftreten. Ähnlich wie das Metallgewebe für Licht durchlässig ist, ist es auch für Wärmestrahlung von heissen Wärmestrahlungsflächen durchlässig. Das heisst, dass das Metallgewebe als Wärmestrahlung streuende Schicht aus Drähten bzw. als diffraktives Gitter zu betrachten ist. Weil die Wellenlänge von Licht ca. 10mal kleiner ist als die relevante Wellenlänge der Wärmestrahlung, kann angenommen werden, dass ausgehend von einem optisch diffraktiven Drahtgewebe ein ähnliches Drahtgewebe mit 10mal grösserem Drahtdurchmesser für die Wärme Strahlung noch diffraktiv wirkt. Mit dieser Analogie kann also eine obere Grenze für Drahtdurchmesser ermittelt werden, indem die obere Grenze für optisch diffraktive Gewebe gesucht wird und dann diese Grösse mit 10 multipliziert wird.

Weil die dreidimensionale Gestalt der Drahtoberfläche das Streuverhalten des Drahtgewebes wesentlich mitprägt, soll beim Abschätzen der Streuwirkung nicht von der Streuung an einem dünnen ebenen Gitter ausgegangen werden, sondern von der Streuung an einer Kugel. Berechnungen des Streuquerschnittes einer perfekt leitenden Kugel für eine unpolarisierte ebene elektromagnetische Welle mit im Verhältnis zum Kugeldurchmesser kleiner Wellenlänge zeigen in der Vorwärtsrichtung ein Maximum und Nebenmaxima bei Winkeln von 35°, 55° und 75°. Ab ca. 40° sind die Nebenmaxima lediglich kleine Abweichungen von einem bis 180° konstanten Wert (Classical Electrodynamics, John David Jackson, Second Edition, John Wiley & Sons, Inc., Seite 452). Das heisst, dass im gesamten Winkelbereich von 40°-180° ein im wesentlichen isotropes Strahlungsfeld und somit auch ein beachtlicher Strahlungsanteil entlang der Innenhaut und insbesondere zurück zum Bauteil erwartet werden kann. Der erwähnte Approximationsansatz überlagert die Wirkung der beleuchteten und der beschatteten Halbkugel und kann lediglich einen Hinweis auf die Art der Wirkung des Drahtgewebes im Strahlungsfeld geben. Eine Approximation für ein Drahtgeflecht mit dreidimensionaler Struktur wäre viel zu komplex. Nebst der komplexen Oberflächenstruktur müssten auch die materialabhängigen richtigen Anteile der von der beleuchteten Oberfläche reflektierten bzw. absorbierten Strahlung einbezogen werden.

Drahtgewebe können somit als effiziente Wärmedämmelemente bei starker Wärmestrahlung eingesetzt werden. Die diffraktive Dämmwirkung ist nicht nur für die Innenhaut sondern auch für die Aussenhaut vorteilhaft. Ein erfindungsgemässes Verfahren zum Isolieren von Bauteilen mit gekrümmten und um mindestens eine Bauteilachse geschlossenen Aussenflächen, umfasst zumindest drei Dämmschritte. In einem ersten und in einem dritten Dämmschritt wird die vom Bauteil ausgehende Wärmestrahlung senkrecht zur Bauteiloberfläche von einer aus Draht hergestellten textilen Innenhaut bzw. Aussenhaut mittels Diffraktion geschwächt. In einem zweiten Dämmschritt wird der Wärmefluss durch die Isolierung mit einer Faserschicht gedämpft. Um das Isolierverfahren vielseitig, insbesondere auch in feuchter Umgebung, einsetzen zu können, werden alle Dämmschritte mit dampfdurchlässigen Mitteln durchgeführt. Das heisst, dass die Innenhaut, die Faserschicht und die Aussenhaut je dampfdurchlässig sind. Um unerwünschte Konvektionsströmungen durch die Aussenhaut und gegebenenfalls durch die Innenhaut zu minimieren, soll die Luftdurchlässigkeit der Hülle bzw. der Innen- und Aussenhaut möglichst klein sein. Das Austreten von Fasern wird mit der Filterfeinheit der Hülle im wesentlichen vollständig verhindert.

Ergänzend zur obigen Diffraktionsbetrachtung kann die Wirkung des Drahtgitters auch über dessen eigene Wärmestrahlung besser verstanden werden. Wenn angenommen wird, das Drahtgitter der Innenhaut habe im wesentlichen die Temperatur des Bauteils, so geht von der gesamten Drahtoberfläche des Drahtgitters Wärmestrahlung aus. Weil die Drahtoberfläche in allen Richtungen senkrecht zur jeweiligen Drahtachse gleiche Flächenanteile hat, kann angenommen werden, dass auch die Wärmestrahlung in diesen Richtungen gleich ist. Das heisst, dass die vom Drahtgitter ausgehende Einstrahlung ins Isoliermaterial und die Rückstrahlung gegen das Bauteil im wesentlichen gleich gross und insbesondere je im wesentlichen isotrop sind. Bei einer Isolationsschicht ist es ein wesentlicher Vorteil, wenn der Wärmetransport, der zu einem Teil aus Strahlungswärme besteht, nicht vorwiegend senkrecht zur Isolationsschicht, sondern auch in der Schicht erfolgt. Dies wird durch die aus Draht gebildete Innenhaut für die Wärmestrahlung gewährleistet. Bei der Verwendung einer Metallfolie ist die gesamte wärmeabstrahiende Oberfläche parallel zur Isolationsschicht ausgerichtet und strahlt daher im wesentlichen nur senkrecht zur Isolationsschicht Wärme ab. was zu einem starken Wärmefluss durch die Isolationsschicht führt.

Die Strahlungsüberlegungen gelten auch für eine Aussenhaut aus Draht. Weil aber an der Aussenfläche der Aussenhaut eine freie Konvektion der Umgebungsluft stattfindet, soll die Aussenhaut wenn möglich auch im Lichte dieser freien Konvektion optimal ausgebildet sein. Grundsätzlich soll mit der Isolierung ein grosser Temperaturunterschied zwischen der Temperatur der Bauteiloberfläche und der Aussenhaut der Isolierung erzielt werden. Daher muss die Temperatur der Aussenhaut möglichst tief liegen. Dies kann durch eine effiziente Wärmeabgabe der Aussenhaut, bzw. durch eine entsprechende konvektive Kühlung erzielt werden, insbesondere wenn der Wärmezufluss durch das Isoliermaterial zur Aussenhaut genügend klein ist. Um die Wärme gut an die Konvektionsströmung abgeben zu können, sollte die Aussenhaut im Verhältnis zum Volumen eine möglichst grosse Oberfläche haben. Dieses Verhältnis ist bei einem Flachmaterial aus Draht im Vergleich zu einer Metallfolie bei gleichem Gewicht pro Fläche bereits wesentlich höher. Bei Flachmaterial aus Draht wird dieses Verhältnis mit abnehmendem Drahtdurchmesser zu. Daher sind die Mikrofilter-Metallgewebe auch als Aussenhaut vorteilhaft einsetzbar. Weil Mikrofilter-Metallgewebe dampfdurchlässig sind, aber Spritzwasser nicht durchlassen, kann gewährleistet werden, dass das Isoliermaterial nicht nass wird und Kondenswasser trotzdem gut aus der Isolierung austreten kann.

Die Hüllen der Isolierelemente können, wie in der WO 97/48943 beschrieben aus Zuschnittteilen zusammengestellt werden, welche miteinander verschweisst sind. Bereits aufgrund des hohen Herstellungsaufwandes ist dies zumindest für grosse Serien nicht vorteilhaft. Ein weiterer Nachteil von verschweissten Zuschnittteilen besteht darin, dass im Bereich der Schweissnähte keine Einzeldrähte bzw. kein Drahtgitter, sondern metallfolienartige bzw. feste Hüllenbereiche ausgebildet sind. Bei Versuchen mit einer aus Zuschnittteilen zusammengeschweissten Isolierung für das Auspuff-System eines Autos waren die Schweissnähte auf den thermographischen Aufnahmen als deutlich wärmere Teilbereiche der Aussenhaut erkennbar.

Um die Herstellung von Isolierungen mit an die Bauteile angepassten Kissen zu vereinfachen. soll weitgehend auf Nähte verzichtet werden. Die Hüllen sollen also vorzugsweise nicht aus einer Vielzahl von Zuschnittteilen aus Flachmaterial zusammengestellt werden, weil dazu arbeitsaufwendige, das textile Flachmaterial verändernde, Schweissnähte nötig sind. Die Bauteile können in Umfangsrichtung durch ein oder durch mindestens zwei miteinander verbundene Schalenelemente umgeben werden. Bei zwei Schalenelementen in Umfangsrichtung sind zwei sich entlang der Bauteilachse erstreckende Verbindungen nötig. Gemäss der WO 97/48943 wird zum Verbinden der Schalenelemente pro Verbindungslinie an jedem Schalenelement ein Klettband und ein Lappen mit einem Klettband vorgesehen. Um einfache und temperaturbeständige Verbindungen bereitzustellen, werden bei der erfinderischen Lösung vorzugsweise Druckknöpfe und/oder Bandelemente, welche die Schalenelemente umlaufen, eingesetzt. Um möglichst wenige Verbindungen gewährleisten zu müssen, werden für Bauteile mit einfacher, insbesondere zylindrischer Form, Isolierungen mit lediglich einer oder gegebenenfalls keiner achsparallelen Verbindungslinie verwendet.

Gegebenenfalls ist es nicht notwendig, die Isolierung entfernen und wieder aufsetzen zu können, weil ja die Abgasleitungen der Motorfahrzeuge kaum gewartet werden. Die Teile des Abgasleitungssystems werden jeweils direkt mit der Isolierung ausgewechselt. Die Isolierung muss mit kleinem Aufwand auf die zu isolierenden Bauteile gebracht werden können. Bei Abgasrohren mit konstantem, oder gegebenenfalls nur in einer Richtung zunehmendem, Querschnitt kann eine schlauchförmige Isolierung in Richtung der Rohrachse über die geraden und gegebenenfalls gebogenen Abschnitte des Rohres gestossen bzw. gezogen werden. Bei komplizierter geformten Bauteilen, insbesondere bei Rohrabgängen bzw. Kollektoren, muss die Isolierung quer zur Bauteilachse über das Bauteil stülpbar und in Umfangsrichtung verbindbar sein. Dazu wird in der Isolierung zumindest eine im wesentlichen parallel zur Bauteilachse verlaufende Teilung bzw mindestens ein Radialspalt ausgebildet. Bei Rohrabgängen geht eine erste Bauteilachse in zwei weiterführende Teilachsen über. Entsprechend muss auch ein Radialspalt entlang der ersten Achse in zwei Teilspalte übergehen. Bei der Anordnung der Spalte bzw. Unterbrechungen muss darauf geachtet werden, dass das seitliche Überstülpen möglich ist. Die Bauteile werden gegebenenfalls mitsamt der Isolierung montiert.

Die erfindungsgemässe Isolierung erstreckt sich entlang von Bauteilen mit gekrümmten und um mindestens eine Bauteilachse geschlossenen Aussenflächen. In Achs- und gegebenenfalls auch in Umfangsrichtung ist sie gegebenenfalls aus aneinander anschliessenden Abschnitten bzw. Elementen zusammengestellt. Jeder Abschnitt bzw. jedes Element umfasst mindestens eine Hülle aus textilem Drahtmaterial und in der Hülle angeordnetes Isoliermaterial. Die gegen das Bauteil gerichtete Teilfläche der Hülle bildet die Innenhaut und die gegen aussen gerichtete Teilfläche der Hülle die Aussenhaut. Die Innenhaut liegt im montierten Zustand zumindest bereichsweise an die Aussenfläche des Bauteils an. Die Hülle erstreckt sich im montierten Zustand zumindest über einen Teilbereich des gesamten Umfangsbereiches der geschlossenen Aussenfläche. Die Innenhaut und die Aussenhaut eines Isolierelementes sind vorzugsweise je einstückig ausgebildet. Eine Hülle mit diesen Merkmalen kann in zwei Formen ausgeführt sein.

In einer ersten Ausführungsform ist die Innen- und Aussenhaut der Hülle in Umfangsrichtung geschlossen. Die Aussenhaut verläuft dabei im wesentlichen koaxial um die Innenhaut. Um die Hülle auch in axialer Richtung abzuschliessen, wird vorzugsweise an beiden stirnseitigen Enden die Innenhaut mit der Aussenhaut entlang des Umfangs verbunden, wobei gegebenenfalls an einem ersten stirnseitigen Ende die Innenhaut einstückig in die Aussenhaut übergehen kann. Daraus ist ersichtlich, dass eine solche Hülle nur eine oder gegebenenfalls zwei Verbindungen, insbesondere Schweissnähte an den Stirnseiten benötigt, was automatisiert durchgeführt werden kann. Eine Isolierung gemäss dieser ersten Ausführungsform ist schlauchförmig und muss in Achsrichtung über das zu isolierende Bauteil gestülpt werden. Dies ist bei einem Bauteil mit im wesentlichen konstanter Querschnittsfläche oder mit lediglich in einer Richtung zunehmendem Querschnitt möglich. Bei gekrümmten Rohren müsste die Rohrkrümmung und die Elastizität der Isolierung so abgestimmt werden, dass die Isolierung auch über den Krümmungsbereich in die richtige Position gezogen werden kann, was meist nicht zweckmässig ist.

In einer zweiten Ausführungsform ist die gesamte Hülle quer zur Längsrichtung zusammenhängend ausgebildet bzw. sind die Innen- und die Aussenhaut zusammen einstückig ausgebildet. Die Innenhaut und die Aussenhaut der Hülle bilden zusammen eine geschlossene Fläche, die zu einer eine Achse zumindest teilweise umschliessenden Hülle geformt ist, wobei Isoliermaterial an nach innen gerichteten Teilflächen der geschlossenen Fläche angeordnet wird und gegebenenfalls an radialen Hüllenflächen beidseits des Längsspaltes Klettenbänder oder vorzugsweise Druckknöpfe angebracht werden, die nach dem Überstülpen eines Bauteils mit der Isolierung ein Festsetzen der Isolierung ermöglichen. Die Isolierung kann aufgrund des Längsspaltes und aufgrund ihrer Elastizität quer zur Achsrichtung des Bauteils über dieses gestülpt werden, was eine äusserst einfache Montage und auch eine Demontage ermöglicht. Anstelle von Klettverbindungen oder Druckknöpfen beim Längsspalt, kann die Hülle auch von beliebigen anderen Verbindungs- bzw. Klemmelementen, insbesondere von Briden, zusammengehalten werden. Wenn in Umfangsrichtung zwei oder mehr teilschalenförmige Isolierelemente vorgesehen werden, so werden diese im Bereich der aneinander anliegenden, im wesentlichen senkrecht zur Bauteiloberfläche ausgerichteten Kontaktflächen möglichst fest und dicht miteinander verbunden. Isolierelemente, die in Achsrichtung aneinander anschliessen, haben gegebenenfalls entgegengesetzt abgestuft angeordnete Stirnflächen, so dass sie im Bereich dieser Abstufung überlappend aneinander anschliessen.

Auch eine Hülle gemäss der zweiten Ausführungsform kann durch lediglich zwei an beiden stirnseitigen Enden entlang des Umfangs ausgebildeten Verbindungen zwischen der Innenhaut und der Aussenhaut abgeschlossen werden, was mit einem sehr kleinen Aufwand verbunden ist. Bauteile umschliessende Hüllen mit Isoliermaterial haben gute thermische und akustische Isolationseigenschaften und können mit den heute bekannten Herstellungsmethoden für textiles Material für verschiedenartig geformte Bauteile ausgebildet werden. Die schlauchförmigen Isolierungen können gegebenenfalls über Rohre gestülpt werden. Bei komplizierteren Bauteilen, insbesondere bei solchen mit Abgängen, und bei in einer Richtung zu- und abnehmenden Querschnitten werden Isolierungen mit einem Längsspalt oder mit mindestens zwei in Umfangsrichtung aneinander anschliessenden Isolierelenemten eingesetzt, so dass die Isolierung mit kleinem Aufwand am Bauteil festsetzbar ist.

Zumindest bei Bauteilen, die nicht rotationssymmetrisch sind, ist das Herstellen von zwei das Bauteil zusammen umschliessenden und entlang von zwei Längsverbindungsflächen miteinander verbindbaren Isolierelementen gegebenenfalls einfacher als das Herstellen einer einzigen geschlossenen Haut, die als Hülle mit einem Längsspalt ausgebildet ist. Gegebenenfalls wird ausgehend von einer geschlossenen Innen- und einer geschlossenen Aussenhaut die Innenhaut und die Aussenhaut im Bereich mindestens eines zu bildenden Längsspaltes in Längsrichtung aufgetrennt und anschliessend entlang der mindestens einen Trennlinie die Innen- mit der zugehörigen Aussenhaut verbunden. Durch das Auftrennen im Verbindungsbereich, insbesondere zwischen zwei Längsnähten, kann der Längsspalt ausgebildet werden.

Wenn die Hülle bzw. zumindest die Innenhaut beispielsweise im Bereich von Rohrkrümmungen oder bei Durchmesseränderungen an die Form des Bauteils angepasst sein soll, so muss diese in zwei verschiedene Richtungen gekrümmt sein. Im Textilbereich werden solche Flächenstrukturen als biaxial gekrümmte Flächen bezeichnet. Traditionel treten nahtfreie biaxial gekrümmte Textilflächen bei Maschenware und bei Flechtware auf. Die bei Socken gängige Ausgestaltung der Ferse entspricht einer an eine Rohrkrümmung angepassten Innenhaut. Das heisst, dass bei Rohrkrümmungen mit im wesentlichen konstantem Durchmesser die Innenhaut und auch die Aussenhaut analog zur Sockenherstellung mit einem schnellen Rundstrickverfahren hergestellt werden kann. Aus der CH 595 831 A5 ist ein Rundstrickverfahren für Medizinalstrümpfe mit biaxial gekrümmten Bereichen (Ferse) bekannt. Wenn nebst Krümmungen auch Durchmesseränderungen und insbesondere auch Abgänge an der Hülle bzw. zumindest an der Innenhaut ausgebildet werden sollen, so kann ein 2-Bett-Ftachstickverfahren eingesetzt werden. Ein solches Strickverfahren mit zwei Nadelbetten ermöglicht beispielsweise gemäss der CH 621 373 A5 das Herstellen eines zylindrischen Hauptteiles mit seitlichen zylindrischen Abgängen, bzw. eines einstückig hergestellten Kleidungsstückes mit Ärmeln. Dieses Flachbettstrickverfahren ermöglicht die vielseitigsten Formgebungen. Aus der CH 503 836 A1 ist eine gestrickte Polsterhaut bekannt, in der Linien mit grösserer Festigkeit eingestrickt sind. Solche Linien können das Festsitzen einer gestrickten Isolierung am Bauteil verbessern. Das Stricken mit Metallfäden ist problematisch, weil bei der Maschenbildung kleine Krümmungsradien, bewegte Krümmungspunkte und hohe Reibungskräfte auftreten. Deshalb sind vorzugsweise nur weiche und gegebenenfalls gut geölte Drähte einzusetzen.

Wirkverfahren sind äusserst schnell, weil die Maschen einer Reihe gleichzeitig gebildet werden. Ein Nachteil besteht darin, dass die Maschenzahl nicht, oder zumindest nur mit grossem Aufwand veränderbar ist. In der Form von Mehrlagengewirken, deren Lagen mit Polfäden verbunden sind, können sphärisch stark geformte Schichten hergestellt werden. Rundgewirke werden in der Form von flexiblen Rohren bzw. Schläuchen und Rohrverteilern hergestellt. Im Bereich der Medizinaltechnik werden beispielsweise künstliche Blutgefässe hergestellt. Aufgrund der hohen Verformbarkeit der erwähnten Gewirke können sie auch bei nicht exakter Passform für Isolationszwecke genügend gut an das Bauteil anliegen.

Beim Flechten handelt es sich um ein Verfahren, das vielseitige Möglichkeiten im Bereich von kompliziert geformten, geschlossenen Flächen eröffnet. Aus der CH 660 506 A5 ist ein schlauchförmiges Geflecht mit axial eingeflochtenen Fäden bekannt, das sich auch bei grossen Axialkräften nicht verformt. Flechtverfahren sind auch für Metalldrähte gut geeignet. Ein Nachteil der Flechtverfahren besteht darin, dass die Spulen mit dem ganzen Fadenvorrat bewegt werden müssen, was die Länge von zusammenhängenden Produktebahnen einschlänkt, bzw. Produktionsunterbrüche zum Ersetzen der Spulen bedingt. Mehrschicht-Rundgeflechte sind besonders geeignet für rotationssymmetrische Geometrien mit variablen Durchmessern. Heute werden bereits Bauteile mit geflochtenen Armierungen im Bereich von Rotorblättern und Crashelementen, sowie für extreme thermische Belastungen eingesetzt. Mit Versuchsanlagen werden profilförmige 3-D-Gefelchte mit komplizierten Querschnitten als Halbzeuge für den Leichtbau hergestellt. Es können auch koaxial mehrschichtige Schlauchgeflechte hergestellt werden. Neuere Entwicklungen sind auf das Herstellen von bauteilähnlichen 3D-Geflechten mit variablen Querschnitten gerichtet. Um die spezielle Formgebung zu erzielen, ist eine Maschine mit einstellbaren Einzelfaden-Orientierungen entwickelt worden. Um die Herstellung zu vereinfachen, ist es gegebenenfalls zweckmässig, wenn das Geflecht direkt auf dem zu isolierenden Bauteil geflochten wird.

Für die erfindungsgemässe Isolierung werden vorzugsweise Gewebe verwendet. Bei einfachen Bauteilgeometrien können ebene Gewebeflächen oder Mehrlagengewebe zweckmässig sein. Vorteilhaft sind auch Rundgewebe, insbesondere mehrlagige Rundgewebe, die sowohl in Zylinder- als auch in Kegelgeometrie hergestellt werden können. Besonders vorteilhaft sind 3D-Kontur-Gewebe bzw. Webverfahren, die aus der WO96/31'643 und/oder der WO98/51'845 bekannt sind und im technischen Bereich in näherer Zukunft eine grosse Bedeutung erhalten werden. Solche Gewebe sind ein- oder mehrlagig mit einstellbarer biaxial gekrümmter Schalenform herstellbar. Bei diesen 3-D Webverfahren bzw. Geweben können Metallfäden als Kett- und Schussfäden problemlos eingesetzt werden.

Es ist gegebenenfalls zweckmässig direkt beim Herstellen des textilen Materiales das Isolationsmaterial einzusetzen. Dabei könnte das Isolationsmaterial gegebenenfalls am textilen Drahtmaterial festsitzen und auf einer Seite vorstehen. Als Beispiel dazu wird die CH 628 197 erwähnt, die ein Verfahren zum Herstellen einer Socke beschreibt. Dabei wird direkt beim Herstellen der Socke verfilzbares Garn mit eingestrickt. Die fertige Socke wird einer Walkbewegung unterworfen, welche eine Verfilzung des verfilzbaren Garnes zu einer polsterartigen Faserschicht bewirkt. Es versteht sich von selbst, dass ein analoges Einbringen und Verfilzen von ursprünglich fadenförmigem Isoliermaterial auch bei den anderen Verfahren zum Herstellen von textilem Material möglich ist.

Vorzugsweise wird aber ein Zweilagen-Webverfahren angewendet, bei dem insbesondere Zuschnitte das schichtförmige Fasermaterial während des Webvorganges zwischen die beiden Weblagen eingebracht wird. Das Isoliermaterial umfasst langfasrige Glas- oder Keramikfasern, vorzugsweise aber Silikatfasern und ist in die Hülle vorzugsweise als Fasermatten-Zuschnitt eingebracht oder gegebenenfalls eingeblasen bzw. gestopft, an einer Haut der Hülle befestigt, oder auf die vom Bauteil abgewandten Seite der Innenhaut gewickelt.

Die bevorzugten Fasermatten bestehen aus langen Fasern und sind bei Vibrationen bezüglich dem Freisetzen von Einzelfasern sehr beständig. Insbesondere sind die Fasern ohne Bindemittel zu einer filzähnlichen Matte verfilzt. Auch wenn die Matten bezüglich Reibung nicht beständig sind, so können sie trotzdem in einer reibungsbeständigen Hülle eingesetzt werden, ohne dass sie im Gebrauch zerfallen. Dies liegt daran, dass die Reibung zwischen dem Bauteil und der Isolierung im wesentlichen auf die reibungsfeste Hülle beschränkt ist. Wenn Fasermaterial verwendet wird, bei dem sich Einzelfasern lösen, bzw. das lose Fasern umfasst, so wird ein Hüllenmaterial mit einer genügend kleinen Filterfeinheit gewählt, so dass die losen Fasern im wesentlichen nicht aus der Hülle austreten können. Die bevorzugte Fasermatte aus Silikatfasern hat Faserlängen im Bereich von 30-70mm insbesondere im wesentlichen von 50mm und Durchmesser im Bereich von 2µm bis 4µm. Tests haben gezeigt, dass diese Fasern von einem Mikrofilter-Metallgewebe mit einer Filterfeinheit von 20µm vollständig zurückgehalten werden.

Die bevorzugte Fasermatte ist unter dem Namen Superwool® im Handel und kann aufgrund der Kassifikationstemperatur von 1050°C bis zu Temperaturen von 1000°C eingesetzt werden. Diese Matte besteht aus Erdalkali-Silikat-Fasem und ist gesundheitlich unbedenklich, weil sich die Fasern durch bzw. in Körperflüssigkeiten auflösen. Dies ist ein wichtiger Vorteil gegenüber den handelsüblichen Keramik-Fasermatten, die gegebenenfalls die Gesundheit gefährden. Die Silikat-Fasermatte zeichnet sich auch im Dauereinsatz bei hohen Temperaturen durch eine geringe Wärmeleitfähigkeit, eine geringe Schwindung und eine hohe Vibrationsbeständigkeit aus. Die zu verwendende Schichtdicke hängt vom Temperaturbereich der zu isolierenden Abgasleitungen, von der zulässigen Temperatur an der Aussenhülle und von den Platzverhältnissen ab. Zur Durchführung von Tests wurde das gesamte Auspuffsystem eines Personenwagens mit einer erfindungsgemässen Isolierung isoliert. Es wurde Fasermaterial mit einer Schichtdicke von 25mm verwendet und dabei konnten sehr gute Messresultate erzielt werden. Die Schichtdicke des Fasermaterials sollte, wenn möglich mindestens 10mm betragen. Um keinen unnötig grossen Platz zu beanspruchen, wird die Schichtdicke nur bei speziellen Anwendungen grösser als 50mm sein. Das Fasermaterial gewährt nebst einer tiefen Wärmeleitungsfähigkeit eine minimale konvektive Luft-Durchströmung und wirkt diffraktiv im Wärmestrahlungsfeld, so dass ein grosser Wärmerückhalt und entsprechend ein grosser Temperaturgradient erzielbar ist.

Bei der Verwendung von verformbaren Hüllen aus Draht und elastischem Isoliermaterial ist die Isolierung weich und kann somit die Form in gewissen Grenzen dem zu isolierenden Körper anpassen. Das Isoliersystem ist trotz weichem Isolierkörper formstabil. Dort wo extreme Längenänderungen infolge von hohen Temperaturen (z.B. bei Auspuffleitungen) durch Metallkompensatoren kompensiert werden, kann die Isolierkomponente zumindest im Bereich des Kompensators flexibel ausgeführt werden, so dass das Isoliersystem die Bewegungen der Auspuffleitung mitmacht. Ansonsten könnte das Isoliersystem selbst und/oder der Kompensator zerstört werden. Die innere Fläche des Isoliersystems bzw. die Innenhaut, die auf den zu isolierenden Körper zu liegen kommt, ist aufgrund des verwendeten Drahtes widerstandsfähig gegen Relativ-Bewegungen, die durch mechanische Schwingungen hervorgerufen werden. Das Isoliermaterial ist aufgrund der langen Fasern vibrationsbeständig.

Das erfindungsgemässe Wärme-Isoliersystem dämpft auch die Schallabstrahlung. In der Isoliermatte werden die Luftbewegungen der Schallwellen behindert bzw. gedämpft. Die Schall-Absorptionskoeffizienten verschiedener Materialien bzw. Wandaufbauten sind frequenzabhängig. Grundsätzlich kann gesagt werden, dass Fasermaterial im Bereich um 1kHz einen hohen Absorptionskoeffizienten aufweist. Die Messungen an einer mit Fasermaterial beschichteten Betonwand zeigen beispielsweise Absorptionskoeffizienten von 0.14, 0.20, 0.79. 0.37 bei den Frequenzen 125Hz, 250Hz. 1kHz. 4kHz. Eine Sperrholzplatte hat in Tieftonbereich erhöhte Absorbtionskoeffizienten. Im Rahmen einer Messung wurden an einer Sperrholzplatte beispielsweise Absorptionskoeffizienten von 0.60, 0.30, 0.09, 0.09 für die Freqeunzen 125Hz, 250Hz, 1kHz, 4kHz bestimmt. Die erhöhte Absorption in Tieftonbereich ist mit einem membranartigen Mitschwingen und der energieaufnehmenden inneren Reibung der Sperrholzplatte erklärbar. Die geringe Absorption im Hochtonbereich zeigt, dass die hochfrequenten Membranschwingungen aufgrund der kleinen Amplituden wenig reibungsaktiv sind.

Beim Lösen der zusätzlichen Schalldämungs-Aufgabe wurde erkannt, dass alle möglichen Schalldämpfungsmassnahmen möglichst vollständig wirksam sein sollten. Mit einer Dämpfungsmembran, die zumindest teilweise aus Draht, oder gegebenenfalls aus drahtähnlichem Material gebildet ist, wird ein breitbandiges Absorptionsspektrum erzielt. Die zumindest teilweise aus Draht hergestellte Dämpfungsmembran ist vorzugsweise als Gewebe, gegebenenfalls aber als Geflecht, Maschenware, Drahtnetz oder Drahtgitter ausgebildet. Es handelt sich also vorzugsweise um eine textile Fläche bzw. um textiles Material aus Draht. Die Dämpfungsmembran hat vorzugsweise eine Dichte im Bereich der Dichten von metallischen Materialien. Dadurch wird die Trägheit der Dämpfungsmembran so erhöht, dass sie im Tieftonbereich die gewünschte inelastische Dämpfung erzielbar macht. Es versteht sich von selbst, dass die Trägheit der Dämpfungsmembran entsprechend der jeweiligen Anwendung bzw. dem effektiven Frequenzspektrum durch die Anpassung des Drahtquerschnittes, der Drahtdichte, des Drahtmaterials und der Gewebestruktur optimiert werden kann. Wobei aber eine Standartausführung der Dämpfungsmembran meist genügt. Eine Dämpfungsmembran die gewebeartig aus Draht gebildet ist, macht nebst der inneren Reibung in den Drähten auch eine mechanische Reibung zwischen einander kontaktierenden Drahtabschnitten erzielbar. Diese Reibung gewährleistet eine hohe Schallabsorptionsfähigkeit der mitschwingenden Dämpfungsmembran.

Aufgrund ihrer textilen Struktur hat die Dämpfungsmembran keine als Reflexionsfläche wirkenden grossen Teilbereiche mit glatter Oberfläche. Die textile bzw. gewebeähnliche Struktur umfasst Durchtrittsöffnungen und ist für den Hochtonbereich durchlässig. Der Hochtonanteil wird nach dem Durchtritt durch die Dämpfungsmembran im weichen Isoliermaterial stark absorbiert. Das Isoliermaterial besteht aus langfaserigem Schichtmaterial, vorzugsweise aus Silikatfasermatten und weist dabei zusammenhängende Luftkanalsysteme zur Hochtonabsorption auf. Bereits beim Durchtritt des. Hochtonanteils durch die, insbesondere mit einem Tieftonanteil mitschwingende, Membran tritt eine Dämpfung an den Gewebedurchtittsöffnungen auf. Die hohe Dichte äusserst kleiner Durchtrittsöffnungen ermöglicht stark reibungsaktive, bzw. turbulenzbildende Luftbewegungen relativ zur Membran. Ein rein elastisches Mitschwingen der Dämpfungsmembran wird dadurch verhindert. Diese Gewebedurchtrittsöffnungen sind nicht wie bei Lochblechen als Eintrittsöffnungen von diskreten Resonatoren zu verstehen. Daher ist die Absorption auch nicht auf enge Frequenzbereiche beschränkt.

Für die Schalldämpfung ist ein beliebiges Drahtgewebe als Dämpfungsmembran einsetzbar, wobei aber aufgrund der hohen Temperaturen und des Wassers, wie bereits beschrieben, vorzugsweise Chrom-., bzw. Edelstahldraht verwendet wird. Wenn eine Dämpfungsmembran nicht direkt an der heissen Bauteiloberfläche anliegt, kann deren textile Fläche gegebenenfalls auch aus synthetischen, vorzugsweise aber aus Glas- oder Keramikfaser-Fäden, gegebenenfalls mit eingeflochtenen Drähten, gebildet sein, wenn damit ähnliche Massen-Flächendichten, Luftdurchlässigkeiten, Schwing- und Reibungs- bzw. Dämpfungseigenschaften erzielt werden. Bevorzugt wird aber Drahtgewebe insbesondere mit 130 Maschen/cm² (mesh/ cm²) und. einer offenen Fläche im Bereich von 40-55%, beispielsweise von ca. 51% als Schalldämpfungsmembran eingesetzt. Das Gewicht dieses Drahtgewebes beträgt ca. 0.910kg/m² bei einem Drahtdurchmesser von ca. 0.25mm.

Weil die Hülle der erfindungsgemässen Isolieremente mit aus Draht hergestelltem Flachmaterial gebildet ist, wirkt die Innen- und die Aussenhaut je bereits als Schall-Dämpfungsmembran. Die Hülle ist vorzugsweise auf eine optimale Wärmedämmung ausgelegt. Daher ist die Innen- und/oder die Aussenhaut, als Mikrofilter-Metallgewebe ausgebildet. Mikrofilter-Metallgewebe haben sehr hohe Maschenzahlen, gegebenenfalls spezielle Webstrukturen und werden aus Drähten mit kleinem Querschnitt gebildet. Entsprechend sind Filterfeinheiten von wenigen Mikrons - beispielsweise von 20µ - und kleine Luftdurchtrittsquerschnitte, bzw. Luftdurchlässigkeitswerte erzielbar, was zur Minimierung von wärmeabführenden Konvektionsströmungen durch die Hülle vorteilhaft ist, bei einer im Schallfeld schwingenden Membran aber nur eine geringe Schalldämpfung aufgrund von reibungsaktiven, bzw. turbulenzbildenden Luftbewegungen durch die Membran erzielbar macht. Ein handelsübliches Mikrofilter-Metallgewebe mit einem Kettdrahtdurchmesser von 0.042mm und einem Schussdrahtdurchmesser von 0.125mm hat eine Maschenzahl von 600x125 pro cm². Dieses Filtergewebe hat ein Gewicht von ca. 0.850kg/ m², was im wesentlichen mit dem Gewicht der bevorzugten Schalldämpfungsmembran übereinstimmt. Nebst der unterschiedlichen Luftdurchlässigkeit besteht ein weiterer Unterschied zwischen diesen beiden beispielhaft aufgeführten Drahtgeweben in deren Beweglichkeit. Das Gewebe mit den dickeren Dähten ist deutlich biegungsstarrer, was insbesondere zum Dämpfen des langwelligen Schalls vorteilhaft ist. Weil das Mikrofilter-Metallgewebe in Schussrichtung einen deutlich grösseren Drahtdurchmesser hat, als in Kettrichtung, ist es in Schussrichtung deutlich biegestarrer als in Kettrichtung. Bei der Verwendung von unterschiedlich dicken Kett- und Schussdrähten, kann bei Mikrofilter-Metallgeweben zumindest in einer Richtung eine schalldämpfungsaktive Biegestarrheit erzielt werden.

Wenn nun aber zum Erzielen einer optimierten Tieftonabsorption die Luftdurchlässigkeit, bzw. die Turbulenzbildung an den Durchtrittsöffnungen und/oder das Gewicht pro Fäche und/oder die Reibung in der schwingenden Membran erhöht sein soll, so kann beispielsweise lediglich die Innen- oder die Aussenhaut oder gegebenenfals eine weitere Lage, insbesondere eine Zwischenlage zwischen der Innen- und der Aussenhaut mit einer grösseren Luftdurchlässigkeit und/oder einem höheren Gewicht pro Fläche und/oder mit einer höheren Reibungswirkung bzw. Deformations-Energieaufnahme vorgesehen werden.

Die bekannten Schallisolierungen verwenden nebst dem schalldämpfenden Isoliermaterial meist auch eine unflexible bzw. feste Blechschicht als Reflektionsfläche. Wenn von einer Schall-Reflexion an der Blechschicht ausgegangen wird, so sind die maximalen Luftbewegungen um eine Viertelwellenlänge von dieser Reflexionsfläche entfernt. Um diese Luftbewegungen optimal dämpfen zu können müsste die Isoliermatte eine Dicke im Bereich einer Viertelwellenlänge haben. Dies ist mit vertretbaren Schichtdicken nur bei hohen Frequenzen möglich, weil die Wellenlängen im Tieftonbereich bis ca 500Hz über 60cm und entsprechend die Viertelwellenlängen über 15cm liegen. Bei 2kHz beträgt die Viertelwellenlänge ca. 4cm und liegt somit im Bereich der gängigerweise eingesetzten Isoliermaterial-Schichtdicken. Entsprechend kann eine erfindungsgemässe Isolierung, die im Bereich der Aussenhaut mit einer Reflexionsfläche ergänzt wird, vorallem im Hochtonbereich mit Frequenzen über 1 kHz schalldämpfend wirksam werden.

Zum Bereitstellen einer Reflexionsfläche können aus festem Flachmaterial Schalenelemente ausgeformt und vorzugsweise in der Hülle, oder gegebenenfalls direkt ausserhalb der Aussenhaut der Hülle angeordnet werden. Das Flachmaterial besteht vorzugsweise aus Metall und hat eine Mächtigkeit von mindestens 1.5mm. Ein Material mit hoher Dichte - beispielsweise Stahl mit ca 8*10³ kg/m³ - hat auch bei kleinen Schichtdicken bereits eine für die gute Reflexion benötigte genügend hohe Trägheit, bzw. eine grosse Masse pro Fläche. Bei leichteren Metallen, wie etwa Aluminium mit einer Dichte von ca. 2.7*10³ kg/m³, muss die Schichtdicke zum Erzielen einer gleich grossen Masse pro Fläche entsprechend, bzw. um den Faktor 3, erhöht werden. Wenn nun eine Reflektionsschicht eingesetzt wird, so muss darauf geachtet werden, dass diese dampfdurchlässig ist. Um ein Überhitzen und plötzliches Verdampfen von Kondensat unter der Reflektionsschicht zu verhindern, ist diese in einem genügend grossen Abstand zum Bauteil angeordnet und umfasst Durchtrittslöcher die vorzugsweise eine Konvektionsströmung und damit einen Dampfaustausch durch die Reflektionsschicht ermöglichen.

Die Formgebung des festen Flachmaterials kann durch Biege- oder Pressverfahren gegebenenfalls auch durch Gussverfahren erfolgen. Bei Bedarf können die erfindungsgemässen Isolierelemente somit im wesentlichen exakt an ein Bauteil angepasst werden. Weil die Schallisolierung mit am Bauteil anliegender Dämpfungsmembran eingesetzt werden kann, ist die erfindungsgemässe Isolierung besonders vorteilhaft bei der Isolierung von Lärm abstrahlenden Rohren und anderen Anlageteilen. Die Isolierung wird in der Form einer Ummantelung direkt am Bauteil angebracht. Dabei werden um Rohre beispielsweise halbschalen-förmige Isolierelemente angeordnet und mit Halteelementen zusammengehalten.

Die Zeichnungen erläutern die erfindungsgemässe Isolierung anhand von Ausführungsbeispielen. Dabei zeigt
- Fig. 1: einen teilweisen Längsschnitt und eine teilweise Seitenansicht eines mit einer schlauchförmigen Isolierung isolierten Rohrabschnittes,
- Fig. 2: eine stirnseitige Ansicht eines mit einer schlauchförmigen Isolierung isolierten Rohrabschnittes,
- Fig. 3: eine schematische Seitenansicht eines Motorfahrzeuges
- Fig. 4: eine Untersicht eines Motorfahrzeuges
- Fig. 5: eine perspektifische Darstellung einer Isolierung für eine Abgasleitung mit Kollektor und Katalysator
- Fig. 6: einen Querschnitt durch eine Isolierung mit einer radialen Teilung und durch das isolierte Abgasrohr
- Fig. 7: eine perspektifische Darstellung einer Isolierung mit an Bauteilabschnitte angepassten, aneinander anschliessenden Abschnitten
- Fig. 8 bis 14: perspektifische Darstellungen der Abschnitte gemäss Fig. 7.

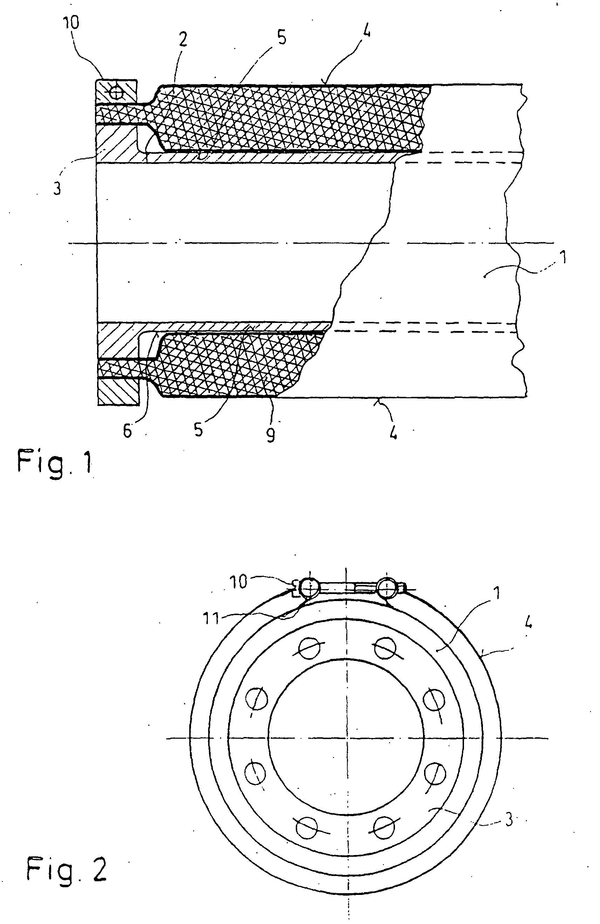

FIG. 1 und 2 zeigen die schlauchartige Isolierung für ein Rohrstück 2, das nur an einem freien Ende einen Flansch 3 hat. Die Isolierung umfasst eine Hülle 1 mit einer Aussenhaut 4 und einer Innenhaut 5, wobei die gesamte Hülle vorzugsweise aus einem gewobenen oder gegebenenfalls geflochtenen Drahtmaterial besteht. Die geflochtene Struktur des Gewebes verleiht ihm eine grosse Elastizität. Aufgrund dieser Elastizität und aufgrund einer möglichst genauen Anpassung der Innenhaut an die Rohroberfläche 6 kann eine gleichmässige Wärmeverteilung auf der Rohroberfläche 6 gewährleistet werden. Dadurch werden Wärmespannungen im Rohr 2, die zu Wärmerissen führen könnten, und Wärmezirkulationen zwischen der Rohroberfläche 6 und der Innenhaut 5 vermieden.

Die Aussenhaut 4 und die Innenhaut 5 sind je als Schläuche gewoben oder geflochten. Dabei gibt es zwei Möglichkeiten, den inneren Schlauch bzw. die Innenhaut 5 mit dem äusseren Schlauch bzw. der Aussenhaut 4 zu verbinden. Im Rahmen einer ersten Lösung werden die beiden Schläuche an beiden strinseitigen Enden entlang ihres Umfangs miteinander verbunden, insbesondere verschweist oder mit Draht vernäht. Im Rahmen einer zweiten Lösung wird die Innenhaut 5 und die Aussenhaut 4 einstückig hergestellt, wobei der Durchmesser der Innenhaut 5 im wesentlichen dem Durchmesser des Rohres 2 entspricht und der Druchmesser der Aussenhaut 4 um ca. zweimal die Isolierstärke grösser ist. Mit den neuen Web- und/oder Flechtmaschinen bzw. Herstellungsverfahren ist es möglich die Innenhaut und die Aussenhaut im wesentlichen parallel miteinander als zweilagiges vorzugsweise geschlossenes Flachmaterial, insbesondere mit bei der Herstellung eingelegtem Isoliermaterial herzustellen. Es ist aber auch möglich zuerst die Innenhaut 5 und an deren Ende eine Aufweitungsfläche und anschliessend die Aussenhaut 4 herzustellen. Bei einer schlauchförmigen Innenhaut wird die Isolierung gegebenenfalls im wesentlichen direkt beim Flechten der Innenhaut aufgebracht. wobei dazu beispielsweise Isoliermaterial direkt um die Innenhaut gewickelt wird. Wenn die Aussenhaut anschliessend an die Innenhaut weiterlaufend hergestellt wurde, muss der dabei entstehende Schlauch mit zwei unterschiedlichen Durchmesserbereichen anschliessend zu einer Hülle umgestülpt werden.

Es ist auch möglich das Isoliermaterial erst in die im wesentlichen fertige Hülle zu füllen. Die Hülle wird gegebenenfalls mit losem Fasermaterial ausgestopft und anschliessend verschlossen. Vorzugsweise aber werden Teile von Fasermatten in der Hülle angeordnet. Das Isoliermaterial 9 muss resistent gegen mechanische Schwingungen sein, d.h. die Fasern müssen derart gestaltet sein, dass sie nicht zerstört werden. Diese Anforderung wird durch langfaserige Isoliermaterialien erreicht. Das Isoliermaterial 9 soll sich im Falle von heissem Motorenöl nicht katalytisch verhalten und umfasst dazu vorzugsweise Silikatfasern bzw. Silikatfasermatten.

Um die Kräfte aufnehmen zu können, die aufgrund von Wärmeausdehnungen und mechanischen Bewegungen des Rohres 2 entstehen, wird die Hülle 1 durch Schlauchbriden 10, die mit einem Steg 11 ausgestattet sind, zumindest an einem freien Enden 3 befestigt.

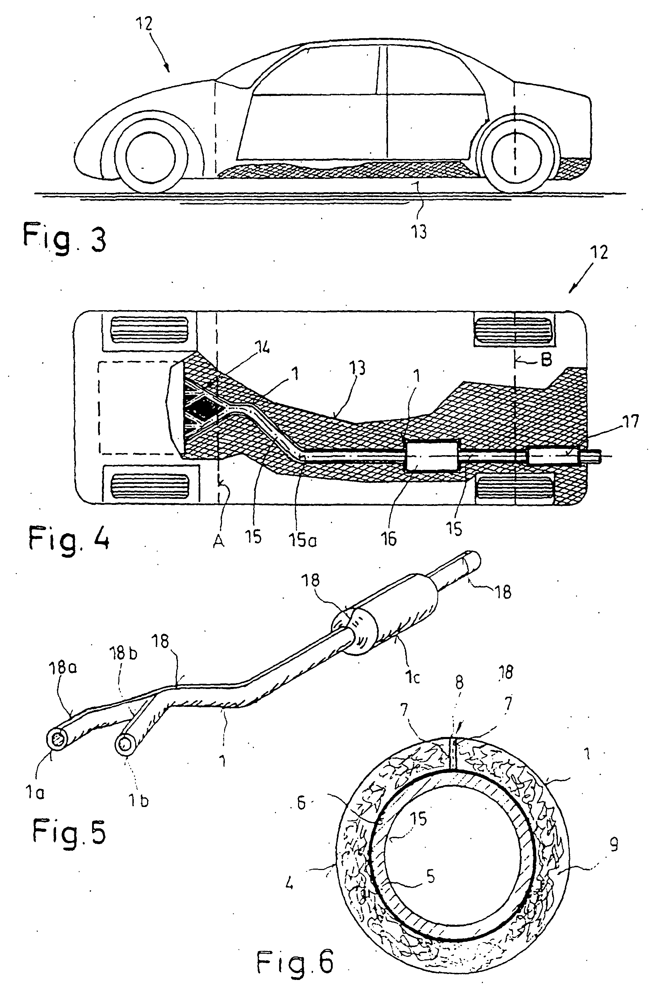

Fig. 3 zeigt ein Motorfahrzeug 12, das im bodennahen Bereich eine flächige Isolationsschicht 13 zum Schützen des Fahrzeuginnenraumes gegen das Eintreten von Abwärme des Abgassystems und gegen das Eintreten von Fahr- und Motorgeräuschen schützt.

Gemäss Fig. 4 umfasst das Abgassystem einen Kollektor 14, der die Abgase von den verschiedenen Zylindern einem gemeinsamen Abgasrohr 15 mit Rohrkrümmungen 15a zuführt. Das Abgasrohr 15 führt zu einem Katalysator 16 und von diesem zu einem Schalldämpfer 17. Indem nun das gesamte Abgassystem 14, 15, 16, 17 mit einer erfindungsgemässen Isolierung bzw. einer mit Isolationsmaterial 9 gefüllten Hülle 1 umschlossen wird, kann gewährleistet werden, dass die Aussentemperatur dieser Hülle 1 nicht mehr als 200°C beträgt. Diese Wärmedämmung direkt bei den abgasführenden Teilen und eine die Aussenseite der Isolierung kühlende Konvektionsströmung ermöglicht es, die Isolationsschicht 13 aus Material zu bilden, das nur auf Temperaturen bis maximal 140°C ausgelegt sein muss. Das heisst die Isolationsschicht 13 kann optimal auf die akustischen Anforderungen ausgerichtet oder aufgrund der starken Schalldämpfung der erfindungsgemässen Isolierung auch weggelassen werden. Aufgrund der tiefen Maximaltemperaturen an der Aussenseite der erfindungsgemässen Isolierung kann unterhalb des Abgassystems ein geschlossener Unterboden angeordnet werden, der optimale aerodynamische Bedingungen im Bereich des Unterbodens erzielbar macht und der zudem einen guten Schutz gegen mechanische Beschädigungen bietet. Weil die maximale Temperatur des Unterbodens durch die Isolierung auf unter 140°C zu liegen kommt, kann der Unterboden aus Duroplast gefertigt werden. Sonst müssten teurere und weniger robuste Thermoplaste eingesetzt werden. Der geschlossene Unterboden führt zu einer Reduktion des Rolllärmeintrages in den Passagierraum und verkleinert aufgrund der Möglichkeit, das Auspuffsystem zu tragen, auch die Anforderungen an die Befestigung desselben.

Durch die Auspuffisolierung sollte es möglich sein, die Einbauten am Unterboden kompakter zu gestalten, da die Temperaturen an der Aussenseite der Isolierung kleiner sind und die Temperaturgradienten im geringen Abstand zur Isolieroberfläche durch die entstehende Konvektion stark abnehmen. Um die Konvektionsströmungen zu ermöglichen sollte um die Isolierung ein Freiraum bereit stehen. Bei einem zumindest teilweise geschlossenen Unterboden entstehen bessere aerodynamische Verhältnisse, was mit einem kleineren Benzinverbrauch und hoher Endgeschwindigkeit auch bei kleinerer Motorenleistung verbunden ist.

Ein erfindungsgemässes Abgasleitungssystem umfasst eine Isolierung, die das Abgasleitungssystem im wesentlichen direkt vom Anschlussbereich am Motor, bzw. vom Kollektor weg, vollständig umschliesst und sich über den überwiegenden Teil des Abgasleitungssystems erstreckt, um die Wärmeenergie der Heissgase im wesentlichen verlustfrei zu führen.

Wenn nun durch die erfindungsgemässe Isolierung auf eine direkte Kühlung des Abgassystems mittels Umgebungsluft verzichtet werden kann, so gelangen die Abgase ohne nennenswerte Temperaturreduktion bis an das Ende des Abgassystems. Dies hat einerseits den Vorteil dass bei Fahrzeugen mit erfindungsgemäss isolierten Katalysatoren, diese sehr schnell auf die benötigte Arbeitstemperatur erwärmt werden und auch bei kurzen Unterbrüchen des Motorenbetriebes nur unwesentlich abkühlen. Andererseits kann die hohe Wärmeenergie der Abgase direkt vor deren Austritt an die Umgebung genützt werden. Dazu werden etwa Wärmetauscher mit mechanischlelektrischen Umwandlungsprozessen eingesetzt, so dass Energie der Abwärme als elektrische Energie der Batterie zugeführt werden kann.

Zur Umwandlung der Wärme in mechanische Energie sind beispielsweise kleine bzw. Miniatur-Dampfturbinen einsetzbar. Die für einen Kreisprozess, bzw. für die Wärmekraftkopplung, zur Verfügung stehende Temperaturdifferenz zwischen der Abgastemperatur und der Umgebungstemperatur ist aufgrund der Isolierung des Abgassystems vom Verbrennungsmotor bis zum Bereich der Wärmeausnützung sehr gross. Weil gemäss dem zweiten Hauptsatz der Thermodynamik der maximale Wirkungsgrad mit der zur Verfügung stehenden Temperaturdifferenz bzw. höherer Eingangstemperatur grösser wird, entspricht die grosse Temperaturdifferenz einem grossen Energienutzungs-Potential. Bei Testfahrten mit einer erfindungsgemässen Auspuffisolierung wurden im Austrittsbereich des Abgassystems Abgastemperaturen von über 600°C gemessen. Bei einem optimalen Wärmetauscher, bzw. Dampferzeuger kann von einer vergleichbaren Eintritts-Dampftemperatur ausgegangen werden. Die Austritts-Dampftemperatur muss so hoch gewählt werden, dass kein Rückstau entsteht. Bei einer Eintrittstemperatur von 600°C und einer Austrittstemperatur von 180°C ergibt sich ein maximaler Wirkungsgrad von 0.5. Wenn nun davon ausgegangen wird, dass ca. 1/3 der von einem Fahrzeug verbrauchten Gesamtenergie in der Wärme der abgeführten Heissgase steckt, so ist bei einer Wärmekraftkopplung mit einem Wirkungsgrad von 0.5 ca. 1/6 der verbrauchten Gesamtenergie aus der gezielten Nutzung der Heissgaswärme rückgewinnbar. Die effektive Fahrleistung liegt bei ca. 1/3 der benötigten Gesamtleistung. Ein Anteil im Bereich von 1/3 der Gesamtenergie wird über die Motorenkühlung ungenutzt an die Umgebung abgegeben. Wenn nun die aus den Heissgasen rückgewinnbare Energie (1/6) im Verhältnis zur effektiv genutzten Fahrenergie (1/3) betrachtet wird, so zeigt sich dass die aus den Heissgasen rückgewinnbare Energie im Bereich von 50% der genutzten Fahrenergie liegt.

Wenn bei der Nutzung der Abwärme der Umweg über die mechanische Rotationsenergie ganz oder teilweise vermieden wird, so können gegebenenfalls auch höhere Wirkungsgrade erzielt werden. Es sind Ansätze bekannt, bei denen beispielsweise die Bewegungsenergie der heissen Gase in magnetohydrodynamischen Generatoren oder die Oxidationsenergie von chemischen Reaktionen in Brennstoffzellen direkt in elektrische Energie umgewandelt wird. Gerade bei Hybridfahrzeugen mit Verbrennungs- und Elektromotor ist ein grosser Bedarf an elektrischer Energie gegeben. Mit einer effizienten Steuerung wäre es also möglich. die aus der Heissgasenergie erzeugte elektrische Energie direkt oder nach der Speicherung in der Batterie effizient für den Fahrantrieb einzusetzen. Bei gleicher Verbrennungsmotorenleistung könnte eine wesentliche Fahrleistungserhöhung erzielt werden.

Fig. 5 zeigt die Isolierung für das Abgassystem gemäss Fig. 4. im Abschnitt zwischen den gestrichelten Linien A und B. Die Hülle 1 ist dabei im Kollektorbereich in zwei Hüllenäste 1a und 1b aufgeteilt und führt nach dem Zusammenschluss als Einzelhülle zu einem für den Katalysator aufgeweiteten Katalysatorbereich 1c. Anschliessend führt die Hülle 1 wieder mit dem kleineren Querschnitt weiter. Um eine Hülle 1 mit den erwähnten geometrischen Formänderungen auf dem Abgassystem montieren zu können, ist in der Hülle 1 eine entlang ihrer Achse verlaufende Teilung bzw. ein Längsspalt 18 ausgebildet, der im Übergangsbereich zu den beiden Hüllenästen 1a und 1b in zwei Spaltäste 18a und 18b übergeht. Es versteht sich von selbst, dass anstelle einer einzigen Hülle 1 in Achsrichtung auch abschnittweise Teilhüllen vorgesehen werden können, die dann aber abstandsfrei aneinander anschliessend angeordnet, insbesondere aneinander befestigt, werden müssen.

Fig. 6 zeigt wie die Hülle 1 mit ihrer Innenhaut 5 an der Aussenfläche des Bauteils bzw. des Abgasrohres 15 anliegt und das ganze Bauteil in Umfangsrichtung umschliesst. Die Innenhaut 5 und die Aussenhaut 4 sind beim Längsspalt 18 über zwei radiale Verbindungsbereiche 7 miteinander verbunden. Um die beiden Verbindungsbereiche 7 miteinander in haltenden Kontakt zu bringen, sind vorzugsweise Klettbänder 8, oder insbesondere Druckknöpfe, an beiden Verbindungsbereichen 7 befestigt.

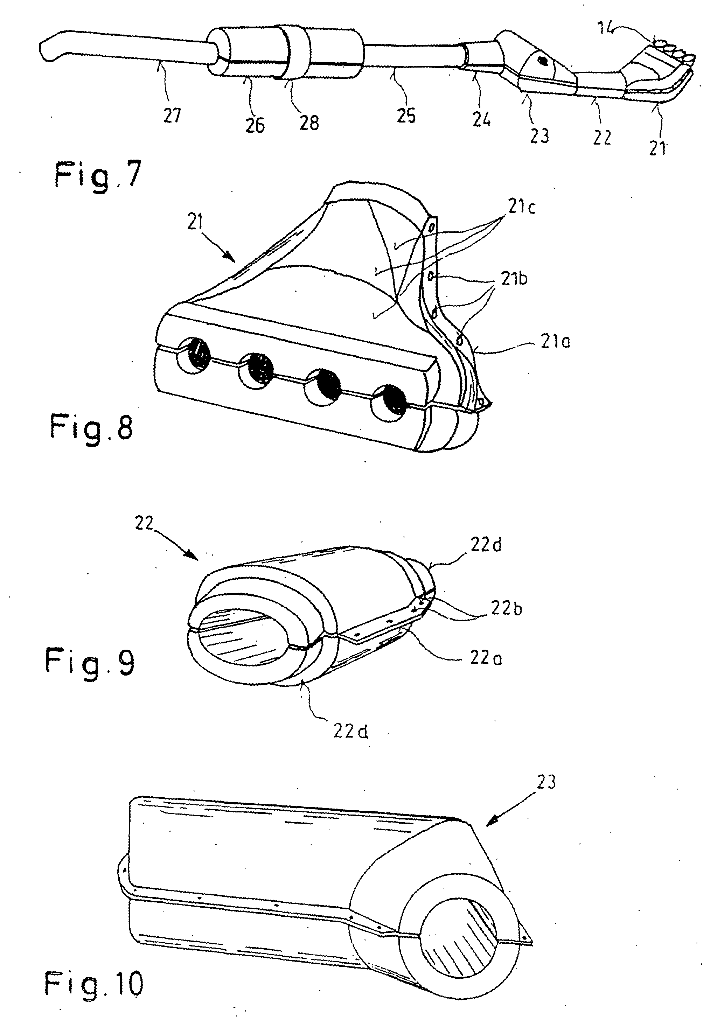

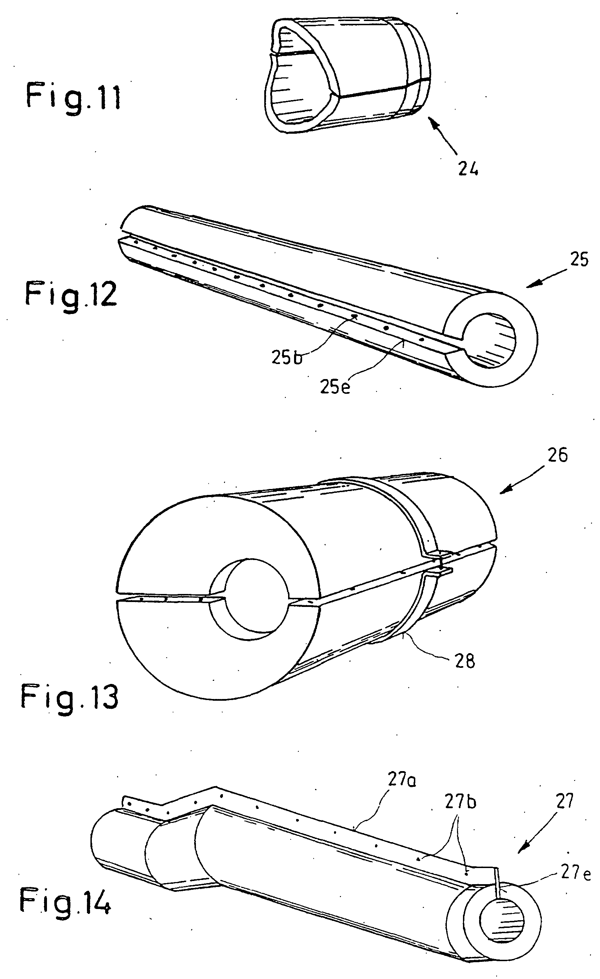

Die Fig. 7 bis 14 zeigen eine Isolierung für ein Abgasleitungssystem mit an die Leitungsabschnitte und die Bauteile angepassten, aneinander anschliessenden Abschnitten. Der Kollektor 14 wird von einer Kollektorisolierung 21 in der Form von zwei Halbschalen isoliert. Die Halbschalen der Kollektorisolierung 21 sind an die Form des Kollektors 14 angepasst und werden bei seitlich über die Verbindungsbereiche vorstehenden Verbindungsstreifen 21a aus Drahtgewebe mit Druckknöpfen 21b aneinander festgesetzt. Beim dargestellten Ausführungsbeispiel handelt es sich um eine Isolierung, deren Hülle aus miteinander verschweissten Zuschnittteilen 21c zusammengestellt ist. Anschliessend an die Kollektorisolierung 21 folgt eine Y-Rohrisolierung 22, die auch aus zwei von Druckknöpfen 22b an Verbindungsstreifen 22a zusammengehaltenen Halbschalen besteht. Um ein dichtes Anschliessen der aufeinander folgenden Abschnitte gewährleisten zu können, sind abgestuft angeordnete Stimflächen 22d vorgesehen, so dass die Abschnitte im Bereich dieser Abstufung überlappend aneinander anschliessen. Auf der vom Kollektor 14 beabstandeten Seite der Y-Rohrisolierung 22, schliesst diese wiederum mit einer Abstufung an eine Katalysatorisolierung 23 an, die auch aus zwei Halbschalen zusammengestellt ist.

Der Übergang vom Katalysator zum anschliessenden Zwischenrohr ist mit einer zweischaligen Flanschisolierung 24 isoliert. Die zwei Schalen der Flanschisolierung 24 werden von Druckknöpfen im Bereich der aneiander anliegenden Verbindungsflächen zusammengehalten. Eine Zwischenrohrisolierung 25 ist als ein Element ausgebildet und umfasst lediglich einen Längsspalt 25e durch den das Zwischenrohr in die Isolierung eingeführt werden kann. Die Verbindungsflächen des Längsspaltes 25e werden von Druckknöpfen 25b zusammengehalten. Anschliessend an die Zwischenrohrisolierung 25 folgt eine zweischalige Schalldämpferisolierung 26, um die für Befestigungszwecke eine Briede 28 angeordnet ist. Ausgehend von der Schalldämpferisolierung 26 wird das gesamte Endrohr mit einer Endrohrisolierung 27 isoliert. Die Endrohrisolierung 27 ist wiederum ein Element mit einem Längsspalt 27e der von Druckknöpfen 27b an vorstehenden Verbindungsstreifen 21a zusammengehalten wird.

Testfahrten mit der Isolierung gemäss Fig. 7 haben anhand von über 30 Temperaturmesssensoren im Bereich des Abgassystems, der Isolierung und der angrenzenden Fahrzeugteile gezeigt, dass die Temperatur der Auspuffleitung beim Kollektor auf ca. 800°C, beim Katalysator auf ca. 750°C und beim Schalldämpfer auf ca. 700°C ansteigen kann. Eine genauere Analyse der Messresultate zeigt, dass die Temperaturdifferenz zwischen Kollektor und Schalldämpfer nicht über 75°C ansteigt, was ein Beweis für die äusserst gute Isolierwirkung ist. Aufgrund dieser hohen Rohrtemperaturen müssen die Rohre und Verbindungs-, bzw. Befestigungsteile aus Materialien hergestellt werden, welche zumindest bis 800°C im Dauerbetrieb eingesetzt werden können. Entsprechend muss auch die Innenhaut der Isolierung zumindest bis 800°C im Dauerbetrieb eingesetzt werden können. Im Innern der gängigen Schalldämpfer ist Glasfasermaterial angeordnet, das bei den erhöhten Temperaturen nicht temperaturbeständig ist. Um ein Schmelzen dieses Materials zu verhindem, muss entweder Material verwendet werden, das zumindest bis 800°C temperaturbeständig ist, oder das Glasfasermaterial im Schalldämpfer muss weggelassen werden. Aufgrund der guten Schalldämpfung durch eine erfindungsgemässe Isolierung, wird der Schalldämpfer vorzugsweise ohne Glasfasermaterial ausgelegt oder gegebenenfalls auch kleiner ausgebildet. Dadurch kann der Schalldämpfer kostengünstiger und platzsparender ausgebildet werden. Die erfindungsgemässe Isolierung wird dann im Bereich des Schalldämpfers besonders auf eine starke Schalldämpfung ausgelegt. Gegebenenfalls wird dazu eine besonders schalldämpfungsaktive, weitere Membran aus Draht eingesetzt, die gegebenenfalls auf die Absorption der dominanten Tieftonanteile ausgelegt ist. Es kann aber insbesondere auch, durch die Erhöhung der Dicke des eingesetzten Isoliermatenals eine Erhöhung der Schalldämpfung erzielt werden.

Thermographische Aufnahmen haben gezeigt, dass die Wärmeverteilung auf der Aussenhaut 5 gleichmässig ist. Einzig aufgrund von Schwachheiten gewisser Isolieranschlüsse und aufgrund von engen Platzverhältnissen zwischen der Isolierung und angrenzender Bereiche treten kleine Teilbereiche mit erhöhter Temperatur hervor. Die Temperatur der Aussenhaut liegt im wesentlichen überall unter 200°C. Nur an einzelnen Stellen, bei denen der Abstand zwischen der Aussenhaut und den angrenzenden Fahrzeukomponenten zu klein bzw. unterhalb von 25mm ist, kann die vorgegebene Maximaltemperatur nicht unterschritten werden. Bereits bei den Tests wurden an den angrenzenden Fahrzeugkomponenten keine Temperaturen über 100°C gemessen. Wenn nun um die Isolierung ein Ringkanal mit einer Mächtigkeit von mindestens 25mm, vorzugsweise im wesentlichen 50mm, insbesondere über der Isolierung im wesentlichen 60mm, sowie mit zweckmässig angeordneten Zu- und Abgangsöffnungen ausgebildet wird, so kann die durch den Ringkanal strömende Konvektionsströmung gewährleisten, dass an der Aussenhaut keine Temperaturen über 200°C und an den angrenzenden Fahrzeugkomponenten keine Temperaturen über 80°C auftreten. Bereits eine passive Konvektionsströmung durch den Ringkanal erzielt im Stillstand auch mit hoher Motorenleistung eine genügende Kühlung.

Der Katalysator gelangt aufgrund der Isolierung schnell auf die benötigte Betriebstemperatur und kühlt nach dem Abstellen des Motors nur langsam ab. Nach 40 Minuten Standzeit beträgt die Temperatur immer noch 515°C und nach 2 Stunden immer noch 200°C.

Messungen des Innen- und des Aussenlärmes zeigen dass die erfindungsgemässe Isolierung ohne die normalerweise eingesetzten flächigen Isolierungen im wesentlichen über den gesamten Frequenzbereich tiefere Schallpegel erzielt als eine flächige Isolierung.

Wenn nun bereits mit einer Hülle aus Zuschnittteilen und einer nicht optimalen Montage gute Messwerte erzielt werden, so wird mit einer einstückigen Innen- und Aussenhaut und genügend grossem Ringkanal um die Isolierung das Resultat noch besser ausfallen.

## Patentansprüche

1. Isolierung zum Isolieren von Bauteilen (2,15) mit gekrümmten und um mindestens eine Bauteilachse geschlossenen Aussenflächen (6), mit einer Hülle (1) und darin angeordnetem Isoliermaterial (9) aus schichtförmigem Fasermaterial, wobei die innere Teilfläche der Hülle (1) die Innenhaut (5) und die äussere Teilfläche der Hülle (1) die Aussenhaut (4) bildet und die Innenhaut (6) zumindest bereichsweise an die Aussenfläche (6) des Bauteils (2,15) anlegbar ist, **dadurch gekennzeichnet, dass** die Hülle (1) aus einem aus Draht hergestellten Flachmaterial gebildet ist, wobei das Fasermaterial direkt an dieses Flachmaterial angrenzt.

2. Isolierung nach Anspruch 1, **dadurch gekennzeichnet, dass** die zur Herstellung der Hülle (1) eingesetzten Drähte aus, bei Temperaturen bis 800°C korrosions-, salzund säurebeständigem Stahl, insbesondere aus Stahl mit der Kennzeichnung WN1.4539, bestehen.

3. Isolierung nach Anspruch 1 oder 2, **dadurch gekennzeichnet, dass** die Hülle (1) aus einem Mikrofilter-Flachmaterial mit einer kleinen Filterfeinheit besteht, wobei die Drähte dieses Mikrofilter-Flachmaterials vorzugsweise Durchmesser im Bereich von 0.02mm bis 0.4, insbesondere von 0.04mm bis 0.13mm haben und gegebenenfalls die Maschenzahl in einer Richtung im Bereich von 80 bis 1000 1/cm oder die Maschenzahl pro Fläche vorzugsweise bei im wesentlichen 600x125 1/cm² liegt.

4. Isolierung nach einem der Ansprüche 1 bis 3, **dadurch gekennzeichnet, dass** das Isoliermaterial (9) aus langfasrigen Glas- oder Keramikfasem, vorzugsweise aber aus Silikatfasern besteht und insbesondere in der Form von Fasermatten-Zuschnitten eingesetzt ist, wobei die Fasermatte vorzugsweise eine Dicke im Bereich von 10mm bis 50mm, insbesondere von im wesentlichen 25mm hat und die Länge der Fasern insbesondere grösser als 2cm, vorzugsweise im wesentlichen 5cm ist.

5. Isolierung nach einem der Ansprüche 1 bis 4, **dadurch gekennzeichnet, dass** zumindest die Innenhaut (5) und die Aussenhaut (4) je einstückig ausgebildet sind, gegebenenfalls aber die Innenhaut (5) und die Aussenhaut (4) der Hülle (1) zusammen eine einzige geschlossene Fläche bilden, wobei die Hülle (1) eine Achse bzw. eine zentrale Linie zumindest teilweise umschliesst und zwei sich in der Hüllen-Längsrichtung erstreckende radiale Verbindungsbereiche (7) umfasst, welche im montierten Zustand an entsprechenden Verbindungsbereichen anliegen.

6. Isolierung nach Anspruch 5, **dadurch gekennzeichnet, dass** die Isolierung bei den Verbindungsbereichen Befestigungselemente, insbesondere Druckknöpfe und/oder Laschen damit, umfasst, mit denen entsprechende Verbindungsbereiche aneinander haltbar sind.

7. Isolierung nach einem der Ansprüche 1 bis 4, **dadurch gekennzeichnet, dass** die Innen- und die Aussenhaut (5,4) schlauchförmig , bzw. je in Umfangsrichtung geschlossen ist.

8. Isolierung nach einem der Ansprüche 1 bis 7, **dadurch gekennzeichnet, dass** die Innenhaut (5) und gegebenenfalls auch die Aussenhaut (4) im montierten Zustand zumindest in einem Teilbereich in zwei verschiedenen Richtungen gekrümmt ist, wobei diese Krümmungen an die Krümmungen der Aussenfläche (6) des Bauteils (2,15) angepasst sind und die Innenhaut (5) und die Aussenhaut (4) vorzugsweise mit einem Webverfahren zum Weben von dreidimensionalen Fläche hergestellt sind.

9. Verfahren zum Isolieren von Bauteilen (2,15) mit gekrümmten und um mindestens eine Bauteilachse geschlossenen Aussenflächen (6), bei dem in einem zweiten Dämmschritt der Wärmefluss durch die Isolierung mit einer Faserschicht gedämpft wird, **dadurch gekennzeichnet, dass** in einem ersten und in einem dritten Dämmschritt die vom Bauteil ausgehende Wärmestrahlung senkrecht zur Bauteiloberfläche von einer aus Draht hergestellten textilen Innenhaut (5) bzw. Aussenhaut (4) mittels Diffraktion geschwächt wird, wobei alle Dämmschritte mit dampfdurchlässigen Mitteln durchgeführt werden und die Innenhaut (5) sowie die Aussenhaut (4) mit ihrer Filterfeinheit die Fasern der Faserschicht in der Hülle zurückhält.

10. Abgasleitungssystem mit einer Isolierung nach einem der Ansprüche 1 bis 8, das mit einem Kollektor an einen Verbrennungsmotor ansschliesst und sich bis zu mindestens einer Austrittsöffnung erstreckt, **dadurch gekennzeichnet, dass** die Isolierung das Abgasleitungssystem im wesentlichen direkt vom Anschlussbereich am Motor, bzw. vom Kollektor weg, vollständig umschliesst und sich über den überwiegenden Teil des Abgasleitungssystems erstreckt, um die Wärmeenergie der Heissgase im wesentlichen verlustfrei zu führen.

11. Abgasleitungssystem nach Anspruch 10, **dadurch gekennzeichnet, dass** um die Isolierung ein Freiraum für eine zumindest teilweise entlang der Isolierung führende Konvektionsströmung vorgesehen ist und/oder die Isolierung einen Katalysator und/oder einen Schalldämpfer umschliesst.

12. Abgasleitungssystem nach Anspruch 10 oder 11, **dadurch gekennzeichnet, dass** es eine am motorabgewandten Ende der Isolierung angeordnete Energieumwandlungsvorrichtung aufweist, insbesondere eine Vorrichtung zum Durchführen eines Kreisprozesses, die Wärmeenergie der Heissgase in mechanische Arbeit oder elektrische Energie umwandelbar macht.

## Claims

1. Insulation for insulating components (2, 15) having arcuate outer surfaces (6) closed about at least one axis of the component, comprising an envelope (1) and insulation material (9) of layer-shaped fibrous material therein, the inner partial surface of the envelope (1) forming an inner skin (5)while the outer partial surface of the envelope (1) facing the exterior forms an outer skin (4), the inner skin (5) engaging the outer surface (6) of the component (2, 15) at least in some region, **characterized in that** the envelope (1) is formed of a flat material made from wire material, the fibrous material directly adjoining said flat material.

2. Insulation according to claim 1, **characterized in that** the wires used for producing the envelope (1) consist of steel resistant at temperatures up to 800°C to corrosion, salt and acid, particularly steel of the designation WN1.4539.

3. Insulation according to claim 1 or 2, **characterized in that** the envelope (1) consists of a flat microfilter material of small filter fineness, the wires of said flat microfilter material having preferably diameters in the range of 0.02mm to 0.4, particularly of 0.04mm to 0.13mm, and that optionally the number of meshes in one direction is in the range of 80 to 1000 1/cm or the number of meshes per surface area is preferably substantially at 600x125 1/cm².

4. Insulation according to any of claims 1 to 3, **characterized in that** the insulation material (9) consists of long glass or ceramic fibers, but preferably of silicate fibers, and is particularly used in the form of cut fiber mattings, the fiber matting having preferably a thickness within the range of 10mm to 50mm, particularly of substantially 25mm, and the length of the fibers being, in particular, longer than 2cm, preferably is substantially 5cm.

5. Insulation according to any of claims 1 to 4, **characterized in that** at least the inner skin (5) and the outer skin (4) are each formed integrally, but that optionally the inner skin (5) and the outer skin (4) of the envelope (1) form a single closed surface together, the envelope (1) surrounding at least in part an axis or central line and comprising two radial interconnection regions (7) extending in longitudinal direction of the envelope which engage corresponding interconnection regions when mounted.

6. Insulation according to claim 5, **characterized in that** the insulation comprises fastening elements, particularly snap fasteners and/or straps including them, in said interconnection regions by which corresponding interconnection regions may be held together.

7. Insulation according to any of claims 1 to 4, **characterized in that** the inner and the outer skins (5, 4) are in hose-shape and closed each in circumferential direction.

8. Insulation according to any of claims 1 to 7, **characterized in that** the inner skin (5) and the outer skin (4) are bent in two different directions at least in a partial section when mounted, these bendings being adapted to the bendings of the outer surface (6) of the component (2, 15), and the inner skin (5) and the outer skin (4) being preferably produced by a weaving process for weaving three-dimensional surfaces.

9. Method for insulating components (2, 15) having curved outer surfaces (6) closed around at least one component axis, wherein a heat flux is attenuated in a second attenuating step by insulating with a fibrous layer, **characterized in that** in a first and in a third attenuation step heat radiation emanating perpendicularly to the component's surface from the component is attenuated by a textile inner skin (5) or outer skin (4) produced from wire material by means of diffraction, all attenuation steps being effected by steam permeable means, while the inner skin (5) as well as the outer skin (4) retain the fibers of the fibrous layers by its filter fineness.

10. Exhaust gas piping system comprising an insulation according to any of claims 1 to 8, which has a collector adjoining a combustion motor and extends towards at least one exit opening, **characterized in that** the insulation encloses the exhaust gas piping system completely substantially directly from the connecting region to the motor or from a collector on, and extends over the major part of the exhaust gas piping system in order to guide the heat energy of the hot gases substantially free of losses.

11. Exhaust gas piping system according to claim 10, **characterized in that** a free space is provided around the insulation for a convection flow guided at least partially along the insulation and/or that the insulation encloses a catalyst and/or a muffler.

12. Exhaust gas piping system according to claim 10 or 11, **characterized in that** there are means for converting energy, particularly means for carrying out a cyclic process, at the end of the insulation averted from the motor rendering heat energy of hot gases convertible into mechanical labor or electric energy.

## Revendications

1. Isolation destinée à isoler des composants (2, 15) munis de parois extérieures coudées et fermées autour d'au moins un axe de composant, comprenant une gaine (1) et un matériau isolant (9) contenu dans celle-ci et formé par un matériau en fibres disposé en couches, la surface partielle intérieure de la gaine (1) formant la membrane intérieure (5) et la surface partielle extérieure de la gaine (1) formant la membrane extérieure (4) et la membrane intérieure (5) venant en appui au moins dans certaines zones contre la paroi extérieure (6) du composant (2, 15), **caractérisée en ce que** la gaine (1) est formée par un matériau plat réalisé à partir de fil, le matériau en fibres étant directement adjacent à ce matériau plat.

2. Isolation selon la revendication 1, **caractérisée en ce que** les fils utilisés pour la fabrication de la gaine (1) sont formés par un acier résistant à des températures allant jusqu'à 800°C, résistant à la corrosion, aux sels et aux acides, en particulier un acier avec la dénomination WN1.4539.

3. Isolation selon la revendication 1 ou 2, **caractérisée en ce que** la gaine (1) est réalisée dans un matériau plat formant un filtre microporeux avec un petit nombre de mailles par unité de surface, les fils de ce matériau plat formant un filtre microporeux présentant de préférence un diamètre dans le domaine de 0,02 mm à 0,4 mm, en particulier de 0,04 mm à 0,13 mm, et, le cas échéant, le nombre de mailles dans un sens se situant dans le domaine de 80 à 1 000 1/cm ou le nombre de mailles par unité de surface étant de préférence sensiblement égal à 600 x 125 1/cm².

4. Isolation selon l'une des revendications 1 à 3, **caractérisée en ce que** le matériau isolant (9) est formé par des fibres de verre ou des fibres céramiques allongées, mais de préférence par des fibres de silicate et est utilisé en particulier sous forme de découpes dans des nappes de fibres, la nappe de fibres ayant de préférence une épaisseur dans le domaine de 10 mm à 50 mm, en particulier sensiblement égale à 25 mm et la longueur des fibres étant en particulier supérieure à 2 cm, de préférence égale à 5 cm.

5. Isolation selon l'une des revendications 1 à 4, **caractérisée en ce qu'**au moins la membrane intérieure (5) et la membrane extérieure (4) sont réalisées d'une seule pièce, mais, le cas échéant, la membrane intérieure (5) et la membrane extérieure (4) de la gaine (1) forment ensemble une seule surface fermée, la gaine (1) entourant au moins en partie un axe ou une ligne centrale et comportant deux zones de raccord (7) radiales qui s'étendent dans le sens longitudinal de la gaine, lesquelles sont en appui à l'état monté contre des zones de raccord correspondantes.

6. Isolation selon la revendication 5, **caractérisée en ce que** l'isolation comporte dans les zones de raccord des éléments de fixation, en particulier des boutons de pression et/ou des pattes associées à ceux-ci, avec lesquels les zones de raccord correspondantes sont maintenues les unes contre les autres.

7. Isolation selon l'une des revendications 1 à 4, **caractérisée en ce que** la membrane intérieure et la membrane extérieure (5, 4) sont en forme de tuyau, et sont fermées chacune dans le sens périphérique.

8. Isolation selon l'une 'des revendications 1 à 7, **caractérisée en ce que** la membrane intérieure (5) et, le cas échéant, aussi la membrane extérieure (4) sont, à l'état monté, coudées dans deux directions différentes, au moins dans une zone partielle, ces coudes étant adaptés aux coudes de la paroi extérieure (6) du composant (2, 15) et la membrane intérieure (5) et la membrane extérieure (4) étant réalisées de préférence par un procédé de tissage destiné à tisser des surfaces tridimensionnelles.

9. Procédé destiné à isoler des composante (2, 15) comportant des parois extérieures (6) coudées et fermées autour d'au moins un axe de composant, dans lequel, au cours d'une deuxième étape de calorifugeage, le flux de chaleur est calorifugé par l'isolation formée par une couche de fibres, **caractérisé en ce que**, dans une première et une troisième étape de calorifugeage, le dégagement de chaleur provenant du composant est réduit par diffraction perpendiculairement à la paroi du composant au moyen d'une membrane intérieure (5) ou d'une membrane extérieure (4) textile réalisée en fil, toutes les étapes de calorifugeage étant effectuées avec des moyens laissant passer la vapeur et la membrane intérieure (5), ainsi que la membrane extérieure (4) retenant par la finesse de leur filtre les fibres de la couche de fibres dans la gaine.

10. Système de tuyau pour gaz d'échappement comprenant une isolation selon l'une des revendications 1 à 8, lequel est raccordé avec un collecteur contre un moteur à combustion interne et s'étend jusqu'à au moins un orifice de sortie, **caractérisé en ce que** l'isolation entoure complètement le système de tuyau pour gaz d'échappement sensiblement directement en partant de la zone de raccordement avec le moteur, à savoir le collecteur, et s'étend sur la plus grande partie du système de tuyau pour gaz d'échappement, afin de guider sensiblement sans perte l'énergie thermique dégagée par les gaz chauds.

11. Système de tuyau pour gaz d'échappement selon la revendication 10, **caractérisé en ce qu'**un espace libre est prévu autour de l'isolation pour un écoulement à convection, guidé au moins en partie le long de l'isolation et/ou l'isolation entoure un catalyseur et/ou un silencieux.

12. Système de tuyau pour gaz d'échappement selon la revendication 10 ou 11, **caractérisé en ce qu'**il comporte un dispositif de conversion de l'énergie, monté sur l'extrémité de l'isolation, opposée au moteur, en particulier un dispositif destiné à effectuer un processus en cycle fermé, qui permet de transformer l'énergie thermique dégagée par les gaz chauds en travail mécanique ou en énergie électrique.
